# EUROPEAN PATENT APPLICATION

(11) **EP 4 545 690 A1**
(43) Date of publication of application: **30.04.2025**
(21) Application number: 23846546.2
(22) Date of filing: 26.07.2023
(51) Int. Cl.: C25B 15/08, C25B 1/04, C25B 9/00, C25B 9/13, C25B 9/23, C25B 15/02, C25B 15/031

(54) **ELECTROLYSIS DEVICE**

(30) Priority: 27.07.2022 JP 2022119271
(71) Applicant: Mitsubishi Heavy Industries, Ltd., Tokyo 100-8332 (JP)
(72) Inventor: FURUKAWA, Shoichi, Tokyo 100-8332 (JP); TAJIMA, Hidehiko, Tokyo 100-8332 (JP); TAGAMI, Naoto, Tokyo 100-8332 (JP); TSURUMAKI, Shigeru, Tokyo 100-8332 (JP); URASHITA, Yasutaka, Tokyo 100-8332 (JP); MUKAI, Daisuke, Tokyo 100-8332 (JP); SUKENOBU, Takahiro, Tokyo 100-8332 (JP); KOSAKA, Kenichiro, Tokyo 100-8332 (JP)
(74) Representative: Studio Torta S.p.A.
(86) International application number: PCT/JP2023/027313
(87) International publication number: WO 2024/024816

(57) **Abstract**

An electrolysis device of the present disclosure includes an electrolytic cell, an electrolyte supply unit, and an ion concentration adjustment unit. The electrolytic cell includes an anode chamber, a cathode chamber, and an ion exchange membrane disposed between the anode chamber and the cathode chamber. The electrolyte supply unit includes at least one tank accommodating an electrolyte, circulates a portion of the electrolyte as a first electrolyte between the at least one tank and the anode chamber, and circulates another portion of the electrolyte as a second electrolyte between the at least one tank and the cathode chamber. The ion concentration adjustment unit supplies an adjustment solution for adjusting a hydrogen ion concentration to the electrolyte supply unit.

## Description

### TECHNICAL FIELD

The present disclosure relates to an electrolysis device.

Priority is claimed on Japanese Patent Application No. 2022-119271, filed July 27, 2022, the content of which is incorporated herein by reference.

### BACKGROUND ART

Patent Document 1 discloses a carbon dioxide electrolysis device including an electrolytic cell having a cathode that reduces a first substance containing carbon dioxide to generate a first product containing a carbon compound, and an anode that oxidizes a second substance containing water or hydroxide ions to generate a second product containing oxygen, a sensor configured to detect an ion concentration in a liquid discharged from at least one of an anode flow path and a cathode flow path, a refreshing agent supply unit capable of supplying a gaseous substance to at least one of the anode flow path and the cathode flow path, and a control unit that controls an operation for stopping supply of carbon dioxide and an electrolyte to the electrolytic cell and supplying the gaseous substance to at least one of the anode flow path and the cathode flow path by the refreshing agent supply unit, based on data acquired by the sensor.

### Citation List

### Patent Document

Patent Document 1: Japanese Unexamined Patent Application, First Publication No. 2020-045515

### SUMMARY OF INVENTION

### Technical Problem

Incidentally, in an electrolysis device of a type such as an anion exchange membrane (AEM) type, ions move between an anode chamber and a cathode chamber as electrolysis proceeds, and a hydrogen ion concentration (pH) in the anode chamber and the cathode chamber is changed. When the hydrogen ion concentration (pH) is changed, electrical conductivity of the electrolyte is changed, thereby resulting in a deterioration in performance of the electrolysis device in some cases.

The present disclosure is made to solve the above-described problem, and an object of the present disclosure is to provide an electrolysis device capable of suppressing a deterioration in performance.

### Solution to Problem

In order to solve the above-described problems, an electrolysis device according to the present disclosure includes an electrolytic cell, an electrolyte supply unit, and an ion concentration adjustment unit. The electrolytic cell includes an anode chamber, a cathode chamber, and an ion exchange membrane disposed between the anode chamber and the cathode chamber. The electrolyte supply unit includes at least one tank accommodating an electrolyte, circulates a portion of the electrolyte as a first electrolyte between the at least one tank and the anode chamber, and circulates another portion of the electrolyte as a second electrolyte between the at least one tank and the cathode chamber. The ion concentration adjustment unit supplies an adjustment solution for adjusting a hydrogen ion concentration (pH) to the electrolyte supply unit.

In order to solve the above-described problem, an electrolysis device according to another aspect of the present disclosure includes an electrolytic cell and an electrolyte supply unit. The electrolytic cell includes an anode chamber, a cathode chamber, and an ion exchange membrane disposed between the anode chamber and the cathode chamber. The electrolyte supply unit includes a common tank accommodating an electrolyte, circulates a portion of the electrolyte as a first electrolyte between the common tank and the anode chamber, and circulates another portion of the electrolyte as a second electrolyte between the common tank and the cathode chamber. The common tank includes a first accommodation unit accommodating the first electrolyte, a second accommodation unit accommodating the second electrolyte, and a membrane disposed between the first accommodation unit and the second accommodation unit and causes at least one of ions and water to be movable between the first accommodation unit and the second accommodation unit.

In order to solve the above-described problem, an electrolysis device according to another aspect of the present disclosure includes an electrolytic cell and an electrolyte supply unit. The electrolytic cell includes an anode chamber, a cathode chamber, and an ion exchange membrane disposed between the anode chamber and the cathode chamber. The electrolyte supply unit includes at least one tank accommodating the electrolyte, circulates a portion of the electrolyte as a first electrolyte between the at least one tank and the anode chamber, and circulates another portion of the electrolyte as a second electrolyte between the at least one tank and the cathode chamber. The at least one tank includes a joining tank that joins and accommodates at least a portion of the first electrolyte and at least a portion of the second electrolyte. The electrolyte supply unit supplies a portion of the electrolyte accommodated in the joining tank as the first electrolyte to the anode chamber, and supplies another portion of the electrolyte accommodated in the joining tank as the second electrolyte to the cathode chamber. Advantageous Effects of Invention

According to the electrolysis device of the present disclosure, a deterioration in performance can be suppressed.

### BRIEF DESCRIPTION OF DRAWINGS

[FIG. 1] A diagram representing an electrolysis device according to a first embodiment of the present disclosure.
[FIG. 2] A cross-sectional view representing an electrolytic cell according to the first embodiment of the present disclosure.
[FIG. 3] A block diagram representing a functional configuration related to a control device according to the first embodiment of the present disclosure.
[FIG. 4] A flowchart representing a flow of control of the first embodiment of the present disclosure.
[FIG. 5] A diagram for describing an adjustment operation of the first embodiment of the present disclosure.
[FIG. 6A] A table representing a change in a hydrogen ion concentration of an electrolyte inside a cathode chamber, which is an example of an adjustment operation in the first embodiment of the present disclosure.
[FIG. 6B] A table representing a change in a hydrogen ion concentration of an electrolyte inside an anode chamber, which is an example of an adjustment operation in the first embodiment of the present disclosure.
[FIG. 7] A diagram for describing an adjustment operation of the first embodiment of the present disclosure.
[FIG. 8] A diagram representing an electrolysis device of a first modification example of the first embodiment of the present disclosure.
[FIG. 9] A diagram representing an electrolysis device according to a second embodiment of the present disclosure.
[FIG. 10] A diagram representing an electrolysis device according to a third embodiment of the present disclosure.
[FIG. 11] A diagram representing an electrolysis device according to a fourth embodiment of the present disclosure.
[FIG. 12] A cross-sectional view taken along line F11-F11 of the electrolysis device represented in FIG. 10.
[FIG. 13] A cross-sectional view taken along line F12-F12 of the electrolysis device represented in FIG. 11.
[FIG. 14] A cross-sectional view representing an electrolysis device according to a modification example of the fourth embodiment of the present disclosure.

### DESCRIPTION OF EMBODIMENTS

Hereinafter, an electrolysis device according to an embodiment of the present disclosure will be described with reference to the drawings. In the following description, the same reference numerals will be assigned to configurations having the same or similar functions.

Repeated description may be omitted.

### (First Embodiment)

### <1. Configuration of Electrolysis Device>

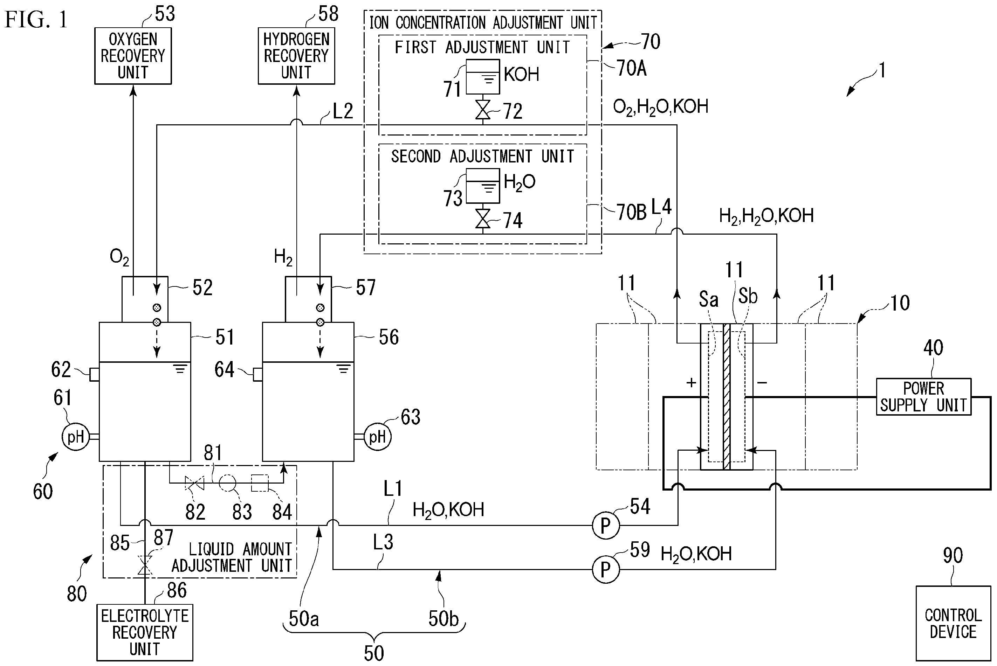

FIG. 1 is a diagram representing an electrolysis device 1 according to a first embodiment. For example, the electrolysis device 1 is a device that generates hydrogen by electrolyzing water or an alkaline aqueous solution contained in an electrolyte. For example, the electrolysis device 1 is an anion exchange membrane (AEM)-type electrolysis device. However, the electrolysis device 1 is not limited to the above-described example. The configuration of the present embodiment can be widely applied to an electrolysis device in which a hydrogen ion concentration (pH) of the electrolyte is changed.

For example, the electrolysis device 1 includes an electrolytic cell stack 10, a power supply unit 40, an electrolyte supply unit 50, a sensor unit 60, an ion concentration adjustment unit 70, a liquid amount adjustment unit 80, and a control device 90.

### (Electrolytic Cell Stack)

The electrolytic cell stack 10 is an assembly of a plurality of electrolytic cells 11. For example, the electrolytic cell stack 10 is formed in such a manner that the plurality of electrolytic cells 11 are aligned in one direction. Each electrolytic cell 11 includes an anode chamber Sa to which the electrolyte is supplied to generate oxygen, and a cathode chamber Sb to which the electrolyte is supplied to generate hydrogen.

### (Power Supply Unit)

The power supply unit 40 is a direct current power supply device that applies a voltage to the electrolytic cell 11. The power supply unit 40 applies a direct current voltage required for the electrolysis of the electrolyte between an anode and a cathode of the electrolytic cell 11.

### (Electrolyte Supply Unit)

The electrolyte supply unit 50 is a supply unit configured to supply the electrolyte to each electrolytic cell 11.

For example, the electrolyte is pure water or an alkaline aqueous solution. The electrolyte supply unit 50 includes at least one tank accommodating the electrolyte, circulates the electrolyte between the at least one tank and the anode chamber Sa, and circulates the electrolyte between the at least one tank and the cathode chamber Sb.

### (Sensor Unit)

The sensor unit 60 detects a value related to the hydrogen ion concentration (pH) or a liquid amount of the electrolyte. A detection result of the sensor unit 60 is transmitted to the control device 90.

### (Ion Concentration Adjustment Unit)

The ion concentration adjustment unit 70 is an adjustment device that adjusts the hydrogen ion concentration (pH) of the electrolyte, when the hydrogen ion concentration (pH) of the electrolyte satisfies a predetermined condition. For example, when the hydrogen ion concentration (pH) of the electrolyte is beyond an allowable range, the ion concentration adjustment unit 70 supplies an adjustment solution for adjusting the hydrogen ion concentration (pH) to the electrolyte supply unit 50.

### (Liquid Amount Adjustment Unit)

The liquid amount adjustment unit 80 is an adjustment device that adjusts the amount of the electrolyte (first electrolyte to be described later) flowing through the anode chamber Sa of the electrolytic cell 11 and/or the amount of the electrolyte (second electrolyte to be described later) flowing through the cathode chamber Sb of the electrolytic cell 11. For example, the liquid amount adjustment unit 80 adjusts the liquid amount of the first electrolyte such that the first electrolyte does not exceed an allowable range.

### (Control Device)

The control device 90 integrally controls the whole electrolysis device 1. For example, the control device 90 controls the ion concentration adjustment unit 70 to perform an adjustment operation of the hydrogen ion concentration (pH), based on detection results of ion concentration sensors 61 and 63 and liquid level sensors 62 and 64 (to be described later). In addition, the control device 90 controls the liquid amount adjustment unit 80 to perform a liquid amount adjustment operation, based on a detection result of the liquid level sensor 62 (to be described later).

Hereinafter, the electrolysis device 1 having this configuration will be described in detail. However, contents described below are merely examples, and are not limited to the scope of the present embodiment.

### <2. Electrolytic cell>

First, the electrolytic cell 11 will be described.

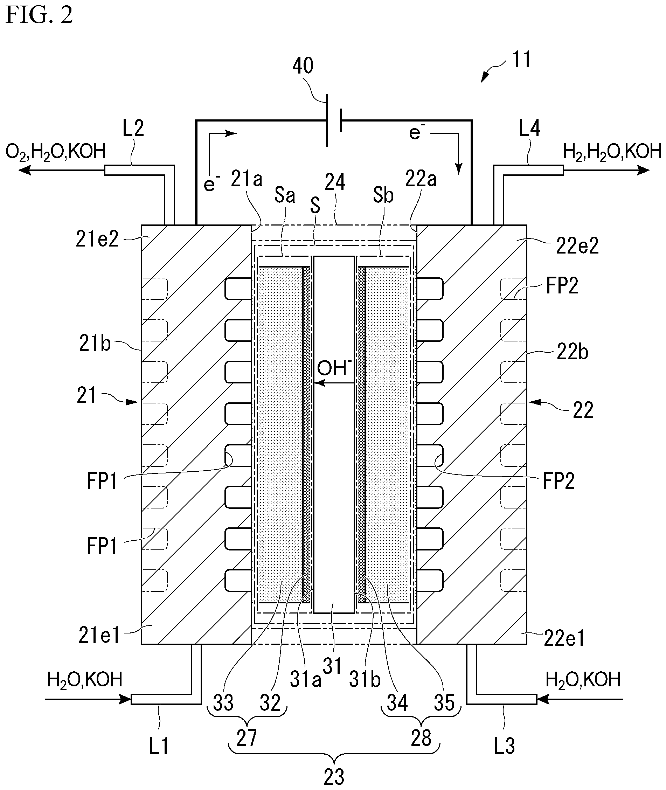

FIG. 2 is a cross-sectional view schematically representing the electrolytic cell 11. For example, the electrolytic cell 11 includes a first separator 21, a second separator 22, a membrane electrode assembly 23, and a sealing portion 24.

### (First Separator)

The first separator 21 is a member that defines one surface of an internal space S of the electrolytic cell 11. The internal space S is a space including the anode chamber Sa and the cathode chamber Sb (to be described later). For example, the first separator 21 has a rectangular plate shape, and includes a metal member. For example, a positive voltage is applied to the first separator 21 from the power supply unit 40 via a current collector (not represented).

The first separator 21 has a first end portion 21el (for example, a lower end portion) and a second end portion 21e2 (for example, an upper end portion) located on a side opposite to the first end portion 21e1. A pipe portion L1 of the electrolyte supply unit 50 (to be described later) is connected to the first end portion 21el of the first separator 21. A pipe portion L2 of the electrolyte supply unit 50 (to be described later) is connected to the second end portion 21e2 of the first separator 21. The first separator 21 has a first inner surface 21a facing the anode chamber Sa (to be described later). A first flow path FP1 through which the electrolyte supplied from the pipe portion L1 flows is formed on the first inner surface 21a. For example, the first flow path FP1 is a groove provided on the first inner surface 21a. The electrolyte flowing through the first flow path FP1 is discharged to the outside of the electrolytic cell 11 through the pipe portion L2. Each structure (for example, a flow path structure) represented in FIG. 2 is merely an example, and does not limit the content of the present embodiment. For example, various structures can be used as the flow path structure, depending on a size, a purpose, and a use environment of the device. The same applies to each structure represented in other drawings.

### (Second Separator)

The second separator 22 is a member disposed at an internal space S between the second separator 22 and at least a portion of the first separator 21 and defining the other surface of the internal space S.

For example, the second separator 22 has a rectangular plate shape, and includes a metal member. A negative voltage is applied to the second separator 22 from the power supply unit 40 via a current collector (not represented).

The second separator 22 has a first end portion 22e1 (for example, a lower end portion) and a second end portion 22e2 (for example, an upper end portion) located on a side opposite to the first end portion 22e1. A pipe portion L3 of the electrolyte supply unit 50 (to be described later) is connected to the first end portion 22e1 of the second separator 22. A pipe portion L4 of the electrolyte supply unit 50 (to be described later) is connected to the second end portion 22e2 of the second separator 22. The second separator 22 has a second inner surface 22a facing the cathode chamber Sb (to be described later). A second flow path FP2 through which the electrolyte supplied from the pipe portion L3 flows is formed on the second inner surface 22a. For example, the second flow path FP2 is a groove provided on the second inner surface 22a. The electrolyte flowing through the second flow path FP2 is discharged to the outside of the electrolytic cell 11 through the pipe portion L4.

Here, for convenience of description, a configuration is described in which the first inner surface 21a of the first separator 21 has a groove for a flow path (first flow path FP1) and the second inner surface 22a of the second separator 22 has a groove for a flow path (second flow path FP2). However, for example, the first separator 21 of the electrolytic cell 11 included in the electrolytic cell stack 10 (refer to FIG. 1) may be a bipolar plate having the same groove for the flow path (first flow path FP1, represented by a two-dot chain line in FIG. 2) on a surface 21b opposite to the first inner surface 21a in addition to the first inner surface 21a. In addition, the second separator 22 of the electrolytic cell 11 included in the electrolytic cell stack 10 may be a bipolar plate having the same groove for the flow path (second flow path FP2, represented by a two-dot chain line in FIG. 2) on a surface 22b opposite to the second inner surface 22a in addition to the second inner surface 22a. The grooves for the flow paths provided on both surfaces of the first separator 21 may have different shapes and dispositions. In addition, the grooves for the flow paths provided on both surfaces of the second separator 22 may have different shapes and dispositions.

### (Membrane Electrode Assembly)

A membrane electrode assembly (MEA) 23 is a structure in which an ion exchange membrane, a catalyst, and a power feeder are assembled. The membrane electrode assembly 23 is disposed between the first separator 21 and the second separator 22, and is located in the internal space S. For example, the membrane electrode assembly 23 includes an ion exchange membrane 31, an anode catalyst layer 32, an anode power feeder 33, a cathode catalyst layer 34, and a cathode power feeder 35.

### (Ion Exchange Membrane)

The ion exchange membrane 31 is a membrane through which ions selectively permeate. For example, the ion exchange membrane 31 is a solid polymer electrolyte membrane. For example, the ion exchange membrane 31 is an anion exchange membrane (AEM) having hydroxide ion conductivity. However, the ion exchange membrane 31 is not limited to the above-described example, and may be an ion exchange membrane having a type different from the above-described example. For example, the ion exchange membrane 31 has a rectangular sheet shape. The ion exchange membrane 31 is disposed between the first separator 21 and the second separator 22, and is located in the above-described internal space S. The ion exchange membrane 31 has a first surface 31a facing the first inner surface 21a of the first separator 21, and a second surface 31b located on a side opposite to the first surface 31a and facing the second inner surface 22a of the second separator 22. In the internal space S, the anode chamber Sa is defined between the first surface 31a of the ion exchange membrane 31 and the first inner surface 21a of the first separator 21. In the internal space S, the cathode chamber Sb is defined between the second surface 31b of the ion exchange membrane 31 and the second inner surface 22a of the second separator 22.

In the anode chamber Sa, when a voltage is applied to the electrolytic cell 11, the following chemical reaction occurs, and water and oxygen are generated. In the present application, the phrase that "XX is generated" may also include a case where another substance is simultaneously generated in association with the generation of XX.

2OH⁻ → 1/2O₂ + H₂O + 2e⁻ ··· (Chemical Formula 1)

In the cathode chamber Sb, when a voltage is applied to the electrolytic cell 11, the following chemical reaction occurs, water is decomposed, and hydrogen is generated. The hydroxide ions generated in the cathode chamber Sb pass through the ion exchange membrane 31, and move from the cathode chamber Sb to the anode chamber Sa.

2H₂O + 2e⁻ → H₂ + 2OH⁻··· (Chemical Formula 2)

In this manner, when viewed from the electrolytic cell 11 as a whole, the following chemical reaction occurs.

H₂O → H₂ + 1/2O₂ ··· (Chemical Formula 3)

Since the above-described chemical reaction occurs, the water is generated in the anode chamber Sa in the electrolyte passing through the anode chamber Sa. Therefore, the liquid amount of the electrolyte increases, and the hydrogen ion concentration (pH) decreases. On the other hand, since the water is decomposed in the cathode chamber Sb in the electrolyte that passes through the cathode chamber Sb, the liquid amount of the electrolyte decreases, and the hydrogen ion concentration (pH) increases.

### (Anode Catalyst Layer)

The anode catalyst layer 32 is a layer that accelerates the chemical reaction in the anode chamber Sa described above. The anode catalyst layer 32 is disposed in the anode chamber Sa, and is adjacent to the ion exchange membrane 31. A portion of the anode catalyst layer 32 may enter a surface portion of the ion exchange membrane 31. A positive voltage is applied to the anode catalyst layer 32 from the power supply unit 40 via the first separator 21 and the anode power feeder 33, and the anode catalyst layer 32 functions as a portion of the anode 27 of the battery cell 11.

### (Anode Power Feeder)

The anode power feeder 33 is an electrical connection portion that transmits the voltage applied to the first separator 21 to the anode catalyst layer 32. The anode power feeder 33 is disposed in the anode chamber Sa. The anode power feeder 33 is located between the first inner surface 21a of the first separator 21 and the anode catalyst layer 32, and is in contact with each of the first inner surface 21a of the first separator 21 and the anode catalyst layer 32. The anode power feeder 33 has a structure in which the electrolyte and gas can pass through the inside. For example, the anode power feeder 33 is formed of a metal mesh structure, a sintered body, a fiber, or the like. In the present embodiment, the anode 27 of the battery cell 11 includes the anode catalyst layer 32 and the anode power feeder 33.

### (Cathode Catalyst Layer)

The cathode catalyst layer 34 is a layer that accelerates the chemical reaction in the cathode chamber Sb described above. The cathode catalyst layer 34 is disposed in the cathode chamber Sb, and is adjacent to the ion exchange membrane 31. A portion of the cathode catalyst layer 34 may enter the surface portion of the ion exchange membrane 31. A negative voltage is applied to the cathode catalyst layer 34 from the power supply unit 40 via the second separator 22 and the cathode power feeder 35, and the cathode catalyst layer 34 functions as a portion of the cathode 28 of the battery cell 11.

### (Cathode Power Feeder)

The cathode power feeder 35 is an electrical connection portion that transmits the voltage applied to the second separator 22 to the cathode catalyst layer 34. The cathode power feeder 35 is disposed in the cathode chamber Sb. The cathode power feeder 35 is located between the second inner surface 22a of the second separator 22 and the cathode catalyst layer 34, and is in contact with each of the second inner surface 22a of the second separator 22 and the cathode catalyst layer 34. The cathode power feeder 35 has a structure in which the electrolyte and gas can pass through the inside. For example, the cathode power feeder 35 is formed of a metal mesh structure, a sintered body, a fiber, carbon paper, or the like. In the present embodiment, the cathode 28 of the battery cell 11 includes the cathode catalyst layer 34 and the cathode power feeder 35.

### (Sealing Portion)

The sealing portion 24 is disposed between the first separator 21 and the second separator 22. The sealing portion 24 is located on an outer peripheral side with respect to an outer edge of the ion exchange membrane 31, and seals the internal space S of the electrolytic cell 11.

The electrolytic cell 11 is not limited to the above-described configuration. For example, when the plurality of electrolytic cells 11 are aligned in the electrolytic cell stack 10, two adjacent electrolytic cells 11 in the plurality of electrolytic cells 11 may share the first separator 21 or the second separator 22, each of which is a bipolar plate.

### <3. Electrolyte Supply Unit>

Next, the electrolyte supply unit 50 will be described with reference to FIG. 1. In the present disclosure, for convenience of description, the electrolyte supplied to the anode chamber Sa of the electrolytic cell 11 may be referred to as a "first electrolyte", and the electrolyte supplied to the cathode chamber Sb of the electrolytic cell 11 may be referred to as a "second electrolyte". However, the terms are for distinction, and the components of the first electrolyte and the components of the second electrolyte may be the same as each other. In addition, in the present disclosure, the first electrolyte and the second electrolyte may be collectively referred to as the "electrolyte".

As represented in FIG. 1, the electrolyte supply unit 50 includes an anode-side supply unit 50a configured to supply the electrolyte (first electrolyte) to the anode chamber Sa of each electrolytic cell 11, and a cathode-side supply unit 50b configured to supply the electrolyte (second electrolyte) to the cathode chamber Sb of each electrolytic cell 11.

### (Anode-Side Supply Unit)

For example, the anode-side supply unit 50a includes a first electrolyte tank 51, a first pipe portion L1, a second pipe portion L2, an oxygen gas-liquid separation device 52, an oxygen recovery unit 53, and a first pump 54.

### (First Electrolyte Tank)

The first electrolyte tank 51 accommodates the first electrolyte. The first electrolyte containing oxygen generated in the anode chamber Sa of the electrolytic cell 11 flows into the first electrolyte tank 51 from the electrolytic cell 11. The first electrolyte tank 51 is an example of a "first tank".

### (First Pipe Portion)

The first pipe portion L1 is a flow path portion that guides the first electrolyte accommodated in the first electrolyte tank 51 to the anode chamber Sa of the electrolytic cell 11. The first pipe portion L1 extends between a supply port of the first electrolyte tank 51 and an inlet of the first flow path FP1 of the electrolytic cell 11.

### (Second Pipe Portion)

The second pipe portion L2 is a flow path portion that guides the first electrolyte passing through the anode chamber Sa of the electrolytic cell 11 to the first electrolyte tank 51. The second pipe portion L2 extends between an outlet of the first flow path FP1 of the electrolytic cell 11 and a return port of the first electrolyte tank 51. The second pipe portion L2 is an example of a "first flow path portion".

### (Oxygen Gas-Liquid Separation Device)

The oxygen gas-liquid separation device 52 is a gas-liquid separation unit that separates oxygen contained in the first electrolyte. The oxygen gas-liquid separation device 52 is provided in the first electrolyte tank 51. For example, the oxygen gas-liquid separation device 52 is provided between the return port of the first electrolyte tank 51 and the second pipe portion L2. The first electrolyte flows into the oxygen gas-liquid separation device 52 from the second pipe portion L2 toward the first electrolyte tank 51, and the oxygen contained in the first electrolyte is separated. Oxygen separated from the first electrolyte by the oxygen gas-liquid separation device 52 is recovered by the oxygen recovery unit 53.

### (First Pump)

The first pump 54 is a pump for supplying the first electrolyte accommodated in the first electrolyte tank 51 to the anode chamber Sa of the battery cell 11. For example, the first pump 54 is provided in an intermediate portion of the first pipe portion L1.

### (Cathode-Side Supply Unit)

For example, the cathode-side supply unit 50b includes a second electrolyte tank 56, a third pipe portion L3, a fourth pipe portion L4, a hydrogen gas-liquid separation device 57, a hydrogen recovery unit 58, and a second pump 59.

### (Second Electrolyte Tank)

The second electrolyte tank 56 accommodates the second electrolyte. The second electrolyte containing hydrogen generated in the cathode chamber Sb of the electrolytic cell 11 flows into the second electrolyte tank 56 from the electrolytic cell 11. The second electrolyte tank 56 is an example of a "second tank".

### (Third Pipe Portion)

The third pipe portion L3 is a flow path portion that guides the second electrolyte accommodated in the second electrolyte tank 56 to the cathode chamber Sb of the electrolytic cell 11. The third pipe portion L3 extends between the supply port of the second electrolyte tank 56 and the inlet of the second flow path FP2 of the electrolytic cell 11.

### (Fourth Pipe Portion)

The fourth pipe portion L4 is a flow path portion that guides the second electrolyte passing through the cathode chamber Sb of the electrolytic cell 11 to the second electrolyte tank 56. The fourth pipe portion L4 extends between the outlet of the second flow path FP2 of the electrolytic cell 11 and the return port of the second electrolyte tank 56. The fourth pipe portion L4 is an example of a "second flow path portion".

### (Hydrogen Gas-Liquid Separation Device)

The hydrogen gas-liquid separation device 57 is a gas-liquid separation unit that separates hydrogen contained in the second electrolyte. The hydrogen gas-liquid separation device 57 is provided in the second electrolyte tank 56. For example, the hydrogen gas-liquid separation device 57 is provided between the return port of the second electrolyte tank 56 and the fourth pipe portion L4. The second electrolyte flows into the hydrogen gas-liquid separation device 57 from the fourth pipe portion L4 toward the second electrolyte tank 56, and the hydrogen contained in the second electrolyte is separated. The hydrogen separated from the second electrolyte by the hydrogen gas-liquid separation device 57 is recovered by the hydrogen recovery unit 58.

### (Second Pump)

The second pump 59 is a pump for supplying the second electrolyte accommodated in the second electrolyte tank 56 to the cathode chamber Sb of the battery cell 11. For example, the second pump 59 is provided in an intermediate portion of the third pipe portion L3.

### <4. Sensor unit>

Next, the sensor unit 60 will be described. In the present embodiment, the sensor unit 60 includes a first ion concentration sensor 61, a first liquid level sensor 62, a second ion concentration sensor 63, and a second liquid level sensor 64. One or more of these sensors may be omitted. For example, one of the first ion concentration sensor 61 and the first liquid level sensor 62 may be omitted. One of the second ion concentration sensor 63 and the second liquid level sensor 64 may be omitted. Each of the first ion concentration sensor 61 and the first liquid level sensor 62 is an example of a "first sensor". Each of the second ion concentration sensor 63 and the second liquid level sensor 64 is an example of a "second sensor".

### (First Ion Concentration Sensor)

The first ion concentration sensor 61 is provided in the first electrolyte tank 51, and detects the hydrogen ion concentration (pH) of the first electrolyte accommodated in the first electrolyte tank 51. A detection value of the hydrogen ion concentration (pH) of the first electrolyte is an example of a "value related to the hydrogen ion concentration (pH) of the electrolyte". In the present disclosure, the "value related to the hydrogen ion concentration (pH) of the electrolyte" detected by the sensor is not limited to the hydrogen ion concentration (pH) itself, and may be another physical quantity (for example, a conductivity or a solute concentration of the electrolyte (for example, a concentration of KOH)) having a specific relationship with the hydrogen ion concentration (pH). For example, the sensor included in the sensor unit 60 is not limited to the ion concentration sensor, and may be a KOH concentration meter sensor or the like. The same applies to the second ion concentration sensor 63.

### (First Liquid Level Sensor)

The first liquid level sensor 62 is provided in the first electrolyte tank 51, and detects a liquid level of the first electrolyte accommodated in the first electrolyte tank 51. The first liquid level sensor 62 is a sensor configured to detect a position of a liquid surface, based on a position of a float, ultrasonic waves, or the like, but is not limited thereto. The detection value of the liquid level of the first electrolyte is an example of a "value related to the liquid amount of the electrolyte". In the present disclosure, the "value related to the liquid amount of the electrolyte" detected by the sensor is not limited to the liquid level of the electrolyte, and may be another physical quantity (for example, a pressure inside a container accommodating the electrolyte) having a specific relationship with the liquid amount of the electrolyte. For example, the sensor included in the sensor unit 60 is not limited to the liquid level sensor, and may be a pressure sensor or the like. The same applies to the second liquid level sensor 64.

### (Second Ion Concentration Sensor)

The second ion concentration sensor 63 is provided in the second electrolyte tank 56, and detects the hydrogen ion concentration (pH) of the second electrolyte accommodated in the second electrolyte tank 56. The detection value of the hydrogen ion concentration (pH) of the second electrolyte is an example of a "value related to the hydrogen ion concentration (pH) of the electrolyte".

### (Second Liquid Level Sensor)

The second liquid level sensor 64 is provided in the second electrolyte tank 56, and detects a liquid level of the second electrolyte accommodated in the second electrolyte tank 56. The second liquid level sensor 64 is a sensor configured to detect the position of the liquid surface, based on the position of the float, ultrasonic waves, or the like, but is not limited thereto. The detection value of the liquid level of the second electrolyte is an example of a "value related to the liquid amount of the electrolyte".

### <5. Ion Concentration Adjustment Unit>

Next, the ion concentration adjustment unit 70 will be described. The ion concentration adjustment unit 70 is a device configured to supply an adjustment solution for adjusting the hydrogen ion concentration (pH) to the electrolyte supply unit 50. In the present embodiment, when the detection result of the sensor included in the sensor unit 60 satisfies a predetermined condition, the ion concentration adjustment unit 70 supplies the adjustment solution to the electrolyte supply unit 50.

In the present embodiment, the adjustment solution supplied by the ion concentration adjustment unit 70 includes a first adjustment solution for increasing the hydrogen ion concentration (pH) and a second adjustment solution for decreasing the hydrogen ion concentration (pH). For example, the first adjustment solution is an alkaline aqueous solution such as a potassium hydroxide aqueous solution (KOH) having a predetermined concentration or higher (for example, 1 mol/L or higher). For example, the second adjustment solution is water (H₂O). The ion concentration adjustment unit 70 includes a first adjustment unit 70A configured to supply a first adjustment solution to the electrolyte supply unit 50 and a second adjustment unit 70B configured to supply a second adjustment solution to the electrolyte supply unit 50.

### (First Adjustment Unit)

The first adjustment unit 70A is a device configured to supply the first adjustment solution to the first portion (for example, any of the first electrolyte tank 51, the first pipe portion L1, and the second pipe portion L2) in which the first electrolyte is accommodated or in which the first electrolyte flows in the electrolyte supply unit 50. In the present embodiment, the first adjustment unit 70A is disposed on the upstream side with respect to the first electrolyte tank 51 in the flowing direction of the electrolyte, and is connected to the second pipe portion L2. The first adjustment unit 70A increases the hydrogen ion concentration (pH) of the first electrolyte by supplying the first adjustment solution into the second pipe portion L2.

In the present embodiment, the first adjustment unit 70A includes a tank 71 and a valve 72. The tank 71 accommodates the first adjustment solution. The valve 72 is provided between the tank 71 and the second pipe portion L2. The valve 72 can switch between an open state where flowing of the first adjustment solution accommodated in the tank 71 toward the second pipe portion L2 is allowed and a closed state where flowing of the first adjustment solution accommodated in the tank 71 toward the second pipe portion L2 is suppressed. The valve 72 switches between the open state and the closed state, based on a control signal of the control device 90 (to be described later). The first adjustment unit 70A supplies the first adjustment solution into the second pipe portion L2 by switching the valve 72 from the closed state to the open state, based on the control signal of the control device 90.

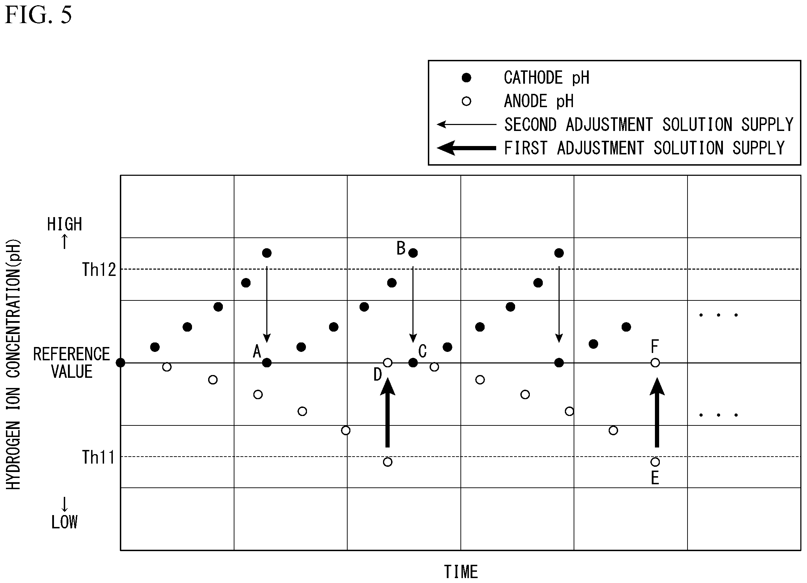

In the present embodiment, when the detection result of the first ion concentration sensor 61 is smaller than a predetermined threshold value Th11 (refer to FIG. 5), the first adjustment unit 70A supplies the first adjustment solution into the second pipe portion L2. The threshold value Th11 is a threshold value corresponding to a lower limit value of an allowable range of the hydrogen ion concentration (pH) of the electrolyte. A description that the detection result of the first ion concentration sensor 61 is smaller than the threshold value Th11 is an example of description a determination that "the detection result of the sensor satisfies a first predetermined condition".

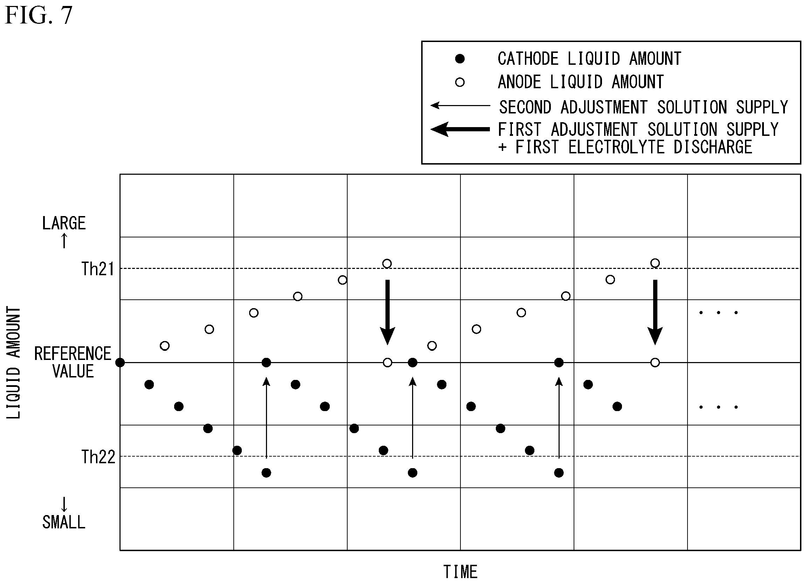

In addition, instead of or in addition to the above-described configuration, when the detection result of the first liquid level sensor 62 is equal to or greater than a predetermined threshold value Th21 (refer to FIG. 7), the first adjustment unit 70A may supply the first adjustment solution into the second pipe portion L2. The threshold value Th21 is a threshold value corresponding to an upper limit value of an allowable range of an increase amount of the first electrolyte (that is, a dilution amount of the electrolyte). In other words, the threshold value Th21 is a threshold value corresponding to a lower limit value of an allowable range of the hydrogen ion concentration (pH) of the electrolyte. A description that the detection result of the first liquid level sensor 62 is equal to or greater than the threshold value Th21 is another example of a description that "the detection result of the sensor satisfies the first predetermined condition".

### (Second Adjustment Unit)

The second adjustment unit 70B is a device configured to supply the second adjustment solution to a second portion (for example, any of the second electrolyte tank 56, the third pipe portion L3, and the fourth pipe portion L4) in which the second electrolyte is accommodated or flows in the electrolyte supply unit 50. In the present embodiment, the second adjustment unit 70B is disposed on the upstream side with respect to the second electrolyte tank 56 in the flowing direction of the electrolyte, and is connected to the fourth pipe portion L4. The second adjustment unit 70B decreases the hydrogen ion concentration (pH) of the second electrolyte by supplying the second adjustment solution into the fourth pipe portion L4.

In the present embodiment, the second adjustment unit 70B includes a tank 73 and a valve 74. The tank 73 accommodates the second adjustment solution. The valve 74 is provided between the tank 73 and the fourth pipe portion L4. The valve 74 can switch between an open state where flowing of the second adjustment solution accommodated in the tank 73 toward the fourth pipe portion L4 is allowed and a closed state where flowing of the second adjustment solution accommodated in the tank 73 toward the second pipe portion L2 is suppressed. The valve 74 switches between the open state and the closed state, based on the control signal of the control device 90 (to be described later). The second adjustment unit 70B supplies the second adjustment solution into the fourth pipe portion L4 by switching the valve 74 from the closed state to the open state, based on the control signal of the control device 90.

In the present embodiment, when the detection result of the second ion concentration sensor 63 is equal to or greater than a predetermined threshold value Th12 (refer to FIG. 5), the second adjustment unit 70B supplies the second adjustment solution into the fourth pipe portion L4. The threshold value Th12 is a threshold value corresponding to an upper limit value of an allowable range of the hydrogen ion concentration (pH) of the electrolyte. A description that the detection result of the second ion concentration sensor 63 is equal to or greater than the threshold value Th12 is an example of a description that "the detection result of the sensor satisfies the second predetermined condition".

In addition, instead of or in addition to the above-described configuration, when the detection result of the second liquid level sensor 64 is smaller than a predetermined threshold value Th22 (refer to FIG. 7), the second adjustment unit 70B may supply the second adjustment solution into the fourth pipe portion L4. The threshold value Th22 is a threshold value corresponding to an upper limit value of an allowable range of a decrease amount of the second electrolyte (that is, the concentration of the electrolyte). In other words, the threshold value Th22 is a threshold value corresponding to an upper limit value of an allowable range of the hydrogen ion concentration (pH) of the electrolyte. A description that the detection result of the second liquid level sensor 64 is smaller than the threshold value Th22 is another example of a description that "the detection result of the sensor satisfies the second predetermined condition".

### <6. Liquid Amount Adjustment Unit>

Next, the liquid amount adjustment unit 80 will be described. The liquid amount adjustment unit 80 is an adjustment unit for decreasing the liquid amount of the first electrolyte that increases as the electrolysis proceeds. In the present embodiment, for example, the liquid amount adjustment unit 80 includes a connection pipe 81 and a discharge pipe 85. At least one of the connection pipe 81 and the discharge pipe 85 may be omitted.

### (Connection Pipe)

The connection pipe 81 is a bypass pipe for moving a portion of the first electrolyte accommodated in the first electrolyte tank 51 to the second electrolyte tank 56. For example, the connection pipe 81 connects a bottom portion of the first electrolyte tank 51 and a bottom portion of the second electrolyte tank 56. The connection pipe 81 is an example of a "connection portion".

For example, when installation heights of the first electrolyte tank 51 and the second electrolyte tank 56 are the same, a portion of the first electrolyte is moved from the first electrolyte tank 51 to the second electrolyte tank 56 through the connection pipe 81 due to a water head pressure based on a difference between a liquid level height of the first electrolyte increased by the electrolysis and a liquid level height of the second electrolyte decreased by the electrolysis. In this case, a water supply pump 83 or the like (to be described later) may be omitted.

The connection pipe 81 may be provided with the water supply valve 82 and/or the water supply pump 83 for adjusting a movement amount of the first electrolyte flowing from the first electrolyte tank 51 toward the second electrolyte tank 56. In addition, the connection pipe 81 may be provided with a gas-liquid separation device 84 for separating air remaining in the first electrolyte flowing from the first electrolyte tank 51 toward the second electrolyte tank 56. Since the gas-liquid separation device 84 is provided, a state where oxygen and hydrogen are mixed can be more reliably avoided.

### (Discharge Pipe)

The discharge pipe 85 is a pipe for discharging a portion of the first electrolyte accommodated in the first electrolyte tank 51 to the outside. For example, the discharge pipe 85 connects a bottom portion of the first electrolyte tank 51 and an external electrolyte recovery unit 86. The discharge pipe 85 is an example of a "discharge portion". The discharge pipe 85 may be provided with a discharge valve 87 for adjusting a discharge amount of the first electrolyte flowing from the first electrolyte tank 51 toward the electrolyte recovery unit 86.

### <7. Control Device>

Next, the control device 90 will be described.

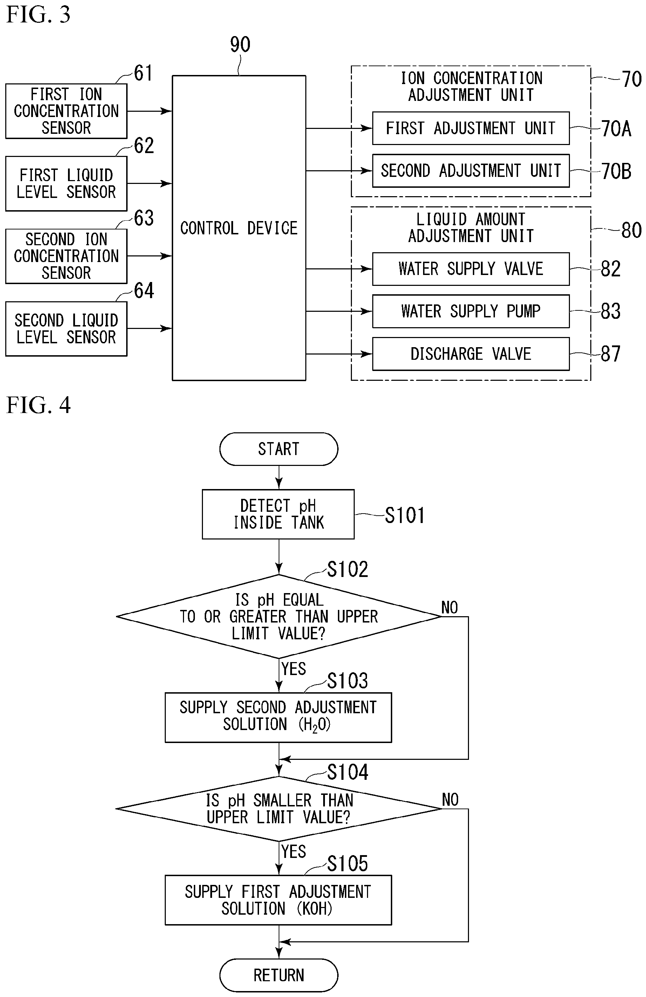

FIG. 3 is a block diagram representing a functional configuration of the control device 90. The detection results of each of the sensors 61, 62, 63, and 64 included in the sensor unit 60 are transmitted to the control device 90. The control device 90 controls an operation for supplying the adjustment solution to the electrolyte supply unit 50 by controlling the ion concentration adjustment unit 70, based on the detection result of the sensor unit 60 (for example, one or more detection results of the sensors 61, 62, 63, and 64).

In the present embodiment, when the detection result of the first ion concentration sensor 61 is smaller than the threshold value Th11, the control device 90 transmits a control signal to the valve 72 of the first adjustment unit 70A to switch the valve 72 from the closed state to the open state. In this manner, the first adjustment solution is supplied into the second pipe portion L2 by the first adjustment unit 70A.

In addition to the above-described configuration, when the detection result of the first liquid level sensor 62 is equal to or greater than the threshold value Th21, the control device 90 may transmit the control signal to the valve 72 of the first adjustment unit 70A to switch the valve 72 from the closed state to the open state.

In the present embodiment, when the detection result of the second ion concentration sensor 63 is equal to or greater than the threshold value Th12, the control device 90 transmits the control signal to the valve 74 of the second adjustment unit 70B to switch the valve 74 from the closed state to the open state. In this manner, the second adjustment solution is supplied into the fourth pipe portion L4 by the second adjustment unit 70B.

In addition to the above-described configuration, when the detection result of the second liquid level sensor 64 is smaller than the threshold value Th22, the control device 90 may transmit the control signal to the valve 74 of the second adjustment unit 70B to switch the valve 74 from the closed state to the open state.

In the present embodiment, when the detection result of the first liquid level sensor 62 is equal to or greater than the threshold value Th21 (or another threshold value), the control device 90 may transmit the control signal to one or more of the water supply valve 82 of the liquid amount adjustment unit 80, the water supply pump 83 of the liquid amount adjustment unit 80, and the discharge valve 87 of the liquid amount adjustment unit 80, and may adjust the liquid amount of the first electrolyte accommodated in the first electrolyte tank 51.

In the present embodiment, when the detection result of the sensor unit 60 satisfies the predetermined condition during an operation of the electrolysis device 1 (during the water electrolysis), the control device 90 controls the ion concentration adjustment unit 70 to adjust the hydrogen ion concentration (pH) of the electrolyte while continuing the operation of the electrolysis device 1. In addition, when the detection result of the sensor unit 60 satisfies the predetermined condition during the operation of the electrolysis device 1, the control device 90 controls the liquid amount adjustment unit 80 to adjust the liquid amount of the electrolyte while continuing the operation of the electrolysis device 1.

### <8. Flow of Control>

Next, a flow of control related to the electrolysis device 1 will be described.

FIG. 4 is a flowchart representing a flow of control for adjusting the hydrogen ion concentration (pH) of the electrolyte. Here, an example will be described in which the hydrogen ion concentration (pH) of the electrolyte is adjusted based on the detection results of the first ion concentration sensor 61 and the second ion concentration sensor 63.

First, the control device 90 acquires the hydrogen ion concentration (pH) of the first electrolyte and the hydrogen ion concentration (pH) of the second electrolyte, based on the detection results of the first ion concentration sensor 61 and the second ion concentration sensor 63 at a predetermined cycle during the operation of the electrolysis device 1 (during the water electrolysis) (S101).

Next, the control device 90 determines whether or not the hydrogen ion concentration (pH) of the second electrolyte is equal to or greater than the upper limit value (second threshold value Th12) of the allowable range (S102). When the hydrogen ion concentration (pH) of the second electrolyte is smaller than the upper limit value of the allowable range (S102: NO), the control device 90 skips the process in S103. On the other hand, when the hydrogen ion concentration (pH) of the second electrolyte is equal to or greater than the upper limit value of the allowable range (YES in S102), the control device 90 transmits the control signal to the second adjustment unit 70B to cause the second adjustment unit 70B to supply the second adjustment solution (S103).

Next, the control device 90 determines whether or not the hydrogen ion concentration (pH) of the first electrolyte is smaller than the lower limit value (first threshold value Th11) of the allowable range (S104). When the hydrogen ion concentration (pH) of the first electrolyte is equal to or greater than the lower limit value of the allowable range (S104: NO), the control device 90 skips the process in S105. On the other hand, when the hydrogen ion concentration (pH) of the first electrolyte is smaller than the lower limit value of the allowable range (YES in S104), the control device 90 transmits the control signal to the first adjustment unit 70A to cause the first adjustment unit 70A to supply the first adjustment solution (S105).

Any of the process related to the second electrolyte (processes in S102 and S103) and the process related to the first electrolyte (processes in S104 and S105) may be first performed, or both may be simultaneously performed.

FIG. 5 is a diagram for describing an operation for adjusting the hydrogen ion concentration (pH). In the present embodiment, the control device 90 monitors the hydrogen ion concentration (pH) of the second electrolyte during the operation of the electrolysis device 1, and each time the hydrogen ion concentration (pH) of the second electrolyte exceeds the upper limit value (threshold value TH12) of the allowable range, the second adjustment unit 70B supplies the second adjustment solution to the cathode chamber Sb. In this manner, the hydrogen ion concentration (pH) of the second electrolyte inside the cathode chamber Sb is maintained within the allowable range. Similarly, the control device 90 monitors the hydrogen ion concentration (pH) of the first electrolyte during the operation of the electrolysis device 1, and each time the hydrogen ion concentration (pH) of the first electrolyte falls below the lower limit value (threshold value Th11) of the allowable range, the first adjustment unit 70A supplies the first adjustment solution to the anode chamber Sa. In this manner, the hydrogen ion concentration (pH) of the first electrolyte inside the anode chamber Sa is maintained within the allowable range.

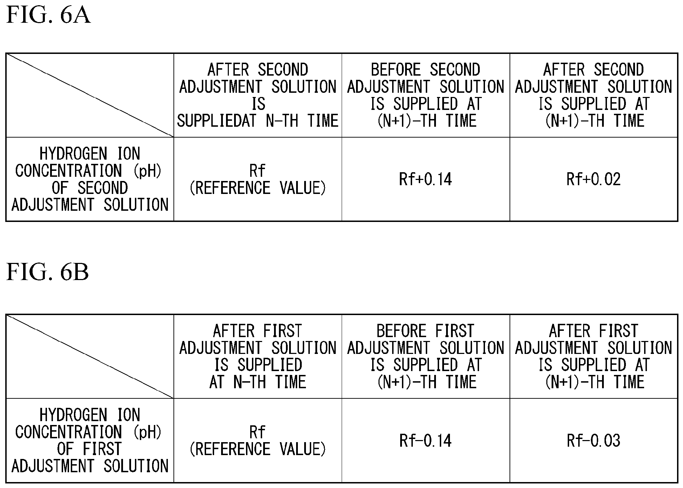

An example of a specific operation will be described with reference to FIGS. 6A and 6B. A voltage starts to be applied to the electrolytic cell 11 by the power supply unit 40, and the hydrogen ion concentration (pH) of the second electrolyte inside the cathode chamber Sb gradually increases with the lapse of time. The hydrogen ion concentration (pH) of the second electrolyte exceeds the threshold value Th12. Therefore, when the second adjustment solution is supplied to the cathode chamber Sb by the second adjustment unit 70B, the hydrogen ion concentration (pH) of the second electrolyte decreases (A in FIG. 5). Thereafter, with the lapse of time, the hydrogen ion concentration (pH) of the second electrolyte inside the cathode chamber Sb exceeds the threshold value Th12 again (B in FIG. 5). Therefore, when the second adjustment unit 70B supplies the second adjustment solution to the cathode chamber Sb, the hydrogen ion concentration (pH) of the second electrolyte decreases again (C in FIG. 5). Thereafter, the above-described operation is repeated. As represented in FIG. 6A, when the hydrogen ion concentration (pH) of the second electrolyte after the second adjustment solution is supplied at the n^{-th} time is set as a reference value (Rf), the hydrogen ion concentration (pH) of the second electrolyte when the hydrogen ion concentration (pH) exceeds the threshold value Th12 at the (n+1)^{-th} time (before the supply of the second adjustment solution, B in FIG. 5) is plus 0.14 with respect to the reference value. The hydrogen ion concentration (pH) of the second electrolyte after the second adjustment solution is supplied at the (n+1)^{-th} time (C in FIG. 5) is plus 0.02 with respect to the reference value.

Similarly, the voltage starts to be applied to the electrolytic cell 11 by the power supply unit 40, and the hydrogen ion concentration (pH) of the first electrolyte inside the anode chamber Sa gradually decreases with the lapse of time. Since the hydrogen ion concentration (pH) of the first electrolyte falls below the threshold value Th11, the hydrogen ion concentration (pH) of the first electrolyte increases (D in FIG. 5) when the first adjustment solution is supplied to the anode chamber Sa by the first adjustment unit 70A. Thereafter, with the lapse of time, the hydrogen ion concentration (pH) of the first electrolyte inside the anode chamber Sa falls below the threshold value Th11 again (E in FIG. 5). Therefore, when the first adjustment solution is supplied to the anode chamber Sa by the first adjustment unit 70A, the hydrogen ion concentration (pH) of the second electrolyte increases again (F in FIG. 5). Thereafter, the above-described operation is repeated. As represented in FIG. 6B, when the hydrogen ion concentration (pH) of the first electrolyte after the first adjustment solution is supplied at the n^{-th} time is set as the reference value (Rf), the hydrogen ion concentration (pH) of the first electrolyte when the hydrogen ion concentration (pH) falls below the threshold value Th11 at the (n+1)^{-th} time (before the supply of the first adjustment solution, E in FIG. 5) is minus 0.14 with respect to the reference value. After the first adjustment solution is supplied at the (n+1)^{-th} time (F in FIG. 5), the hydrogen ion concentration (pH) of the first electrolyte is minus 0.03 with respect to the reference value.

FIG. 7 is a diagram for describing an operation when the hydrogen ion concentration (pH) is adjusted based on the liquid level of the electrolyte. In the example represented in FIG. 7, the control device 90 monitors the liquid level of the second electrolyte inside the cathode chamber Sb during the operation of the electrolysis device 1, and each time the liquid level of the second electrolyte falls below the lower limit value (threshold value Th22) of the allowable range of the liquid level, the second adjustment unit 70B supplies the second adjustment solution to the cathode chamber Sb. In this manner, the hydrogen ion concentration (pH) and the liquid level of the second electrolyte inside the cathode chamber Sb are maintained within the allowable range. In addition, the control device 90 monitors the liquid level of the first electrolyte inside the anode chamber Sa during the operation of the electrolysis device 1, and each time the liquid level of the first electrolyte exceeds the upper limit value (threshold value Th21) of the allowable range, the first adjustment unit 70A supplies the first adjustment solution to the anode chamber Sa, and the liquid amount adjustment unit 80 decreases the liquid amount of the first electrolyte.

In this manner, the hydrogen ion concentration (pH) and the liquid level of the first electrolyte inside the anode chamber Sa are maintained within the allowable range.

### <9. Advantage>

For example, in the electrolysis device such as the AEM type, as the electrolysis proceeds, the hydrogen ion concentration (pH) of the electrolyte is changed due to the concentration or the dilution of the electrolyte. When the hydrogen ion concentration (pH) of the electrolyte is changed, the electrical conductivity of the electrolyte is changed, thereby resulting in a deterioration in performance of the electrolysis device in some cases.

Therefore, in the present embodiment, the electrolysis device 1 includes the ion concentration adjustment unit 70 configured to supply the adjustment solution for adjusting the hydrogen ion concentration (pH) to the electrolyte supply unit 50. According to this configuration, when the hydrogen ion concentration (pH) of the electrolyte is changed, the ion concentration of the electrolyte can be maintained within a constant range by adding the adjustment solution to the electrolyte. In this manner, a change in the electrical conductivity of the electrolyte can be suppressed, and the deterioration in the performance of the electrolysis device can be suppressed.

### (Modification Example)

Next, a modification example of the first embodiment will be described. The present modification example may be realized by appropriately combining a second embodiment and a third embodiment (to be described later).

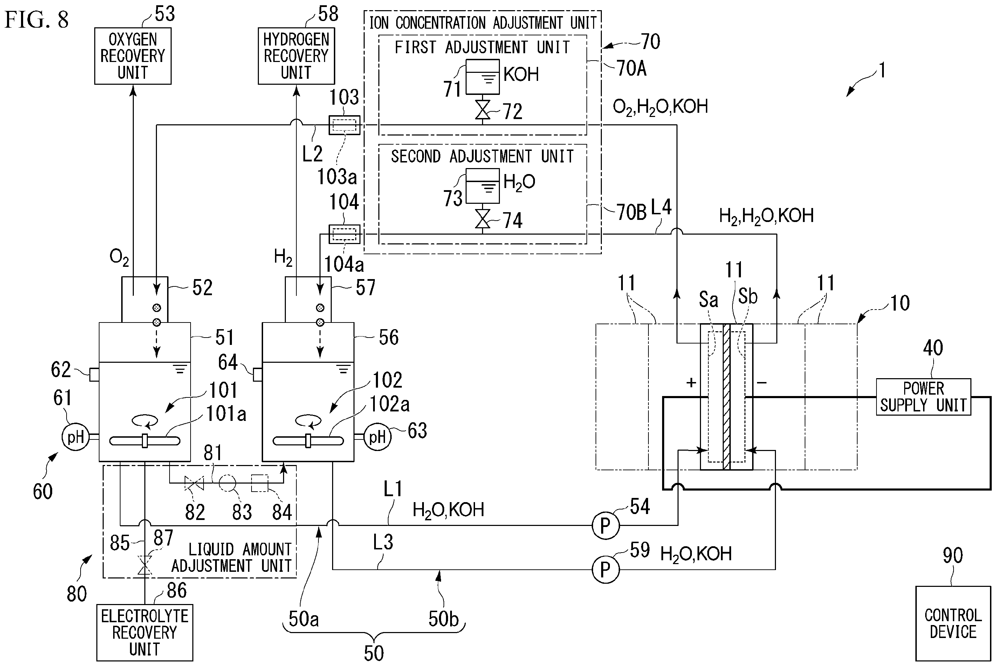

FIG. 8 is a diagram representing an electrolysis device 1A of a first modification example of the first embodiment. In the present modification example, the electrolyte supply unit 50 includes a first stirrer 101, a second stirrer 102, a first mixer 103, and a second mixer 104. One or more of the first stirrer 101, the second stirrer 102, the first mixer 103, and the second mixer 104 may be omitted.

The first stirrer 101 is a device that stirs the first electrolyte inside the first electrolyte tank 51. The first stirrer 101 includes a rotation member 101a that is rotatable inside the first electrolyte tank 51. Since the rotation member 101a is rotated inside the first electrolyte tank 51, mixing is promoted between the first electrolyte accommodated in the first electrolyte tank 51 and the first adjustment solution supplied by the first adjustment unit 70A.

The second stirrer 102 is a device that stirs the second electrolyte inside the second electrolyte tank 56. The second stirrer 102 includes a rotation member 102a that is rotatable inside the second electrolyte tank 56. Since the rotation member 102a is rotated inside the second electrolyte tank 56, mixing is promoted between the second electrolyte accommodated in the second electrolyte tank 56 and the second adjustment solution supplied by the second adjustment unit 70B.

The first mixer 103 is a device provided on the downstream side with respect to the first adjustment unit 70A in the second pipe portion L2 and promoting the mixing between the first electrolyte flowing through the second pipe portion L2 and the first adjustment solution supplied by the first adjustment unit 70A. For example, the first mixer 103 includes a spiral portion 103a provided in the second pipe portion L2. The spiral portion 103a has a groove having a spiral shape or protrusion, and promotes the mixing between the first electrolyte and the first adjustment solution by rotating the flow of the first electrolyte.

The second mixer 104 is a device provided on the downstream side with respect to the second adjustment unit 70B in the fourth pipe portion L4 and promoting the mixing between the second electrolyte flowing through the fourth pipe portion L4 and the second adjustment solution supplied by the second adjustment unit 70B. For example, the second mixer 104 includes a spiral portion 104a provided in the fourth pipe portion L4. The spiral portion 104a has a groove having a spiral shape or protrusion, and promotes mixing of the second electrolyte and the second adjustment solution by rotating the flow of the second electrolyte.

According to this configuration, when the mixing of the electrolyte and the adjustment solution is promoted, the hydrogen ion concentration (pH) of the electrolyte is likely to be uniform. When the hydrogen ion concentration (pH) of the electrolyte is likely to be uniform, the performance of the electrolysis device 1 can be further improved.

### (Second Embodiment)

Next, a second embodiment will be described. The second embodiment is different from the first embodiment in that a common tank 110 is provided. Configurations other than those described below are the same as those in the first embodiment.

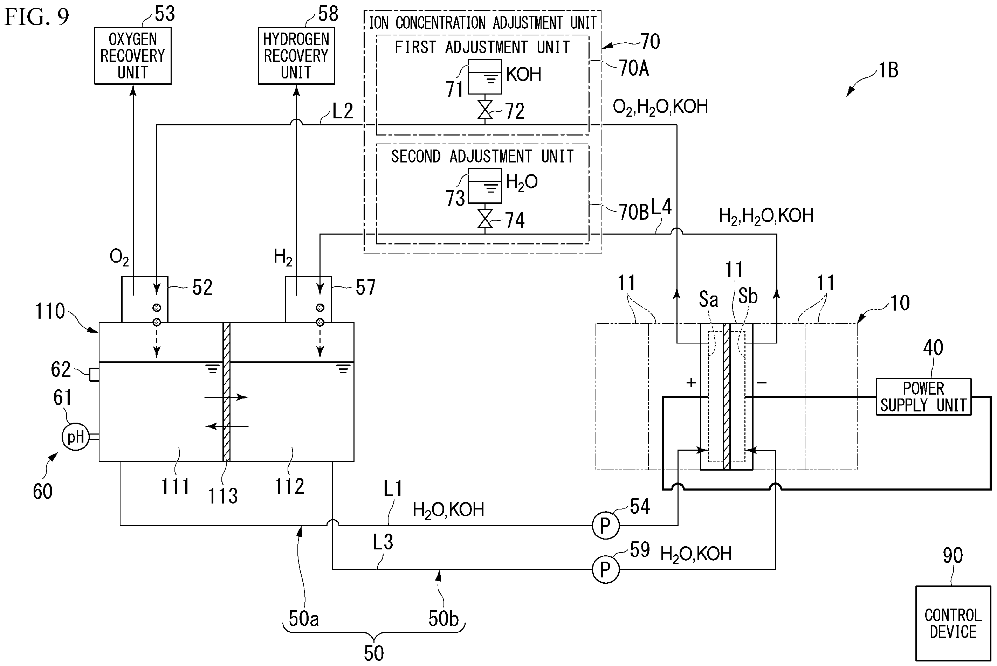

FIG. 9 is a diagram representing an electrolysis device 1B of the second embodiment. In the present embodiment, the electrolysis device 1B includes the common tank 110 instead of the first electrolyte tank 51 and the second electrolyte tank 56. The common tank 110 is one tank into which both the first electrolyte and the second electrolyte flow.

For example, the common tank 110 includes a first accommodation unit 111, a second accommodation unit 112, and a diaphragm 113.

The first accommodation unit 111 is a region (space) that accommodates the first electrolyte inside the common tank 110. The first accommodation unit 111 is connected to the second pipe portion L2 via the first gas-liquid separation device 52. The first electrolyte flowing through the second pipe portion L2 is separated by oxygen passing through the first gas-liquid separation device 52, and thereafter, is accommodated in the first accommodation unit 111. In addition, the first accommodation unit 111 is connected to the first pipe portion L1. The first electrolyte accommodated in the first accommodation unit 111 is supplied to the anode chamber Sa of the electrolytic cell 11 via the first pipe portion L1.

The second accommodation unit 112 is a region (space) that accommodates the second electrolyte inside the common tank 110. The second accommodation unit 112 is connected to the fourth pipe portion L4 via the second gas-liquid separation device 57. Hydrogen is separated in the second electrolyte flowing through the fourth pipe portion L4 when passing through the second gas-liquid separation device 57, and thereafter, the second electrolyte is accommodated in the second accommodation unit 112. In addition, the second accommodation unit 112 is connected to the third pipe portion L3. The second electrolyte accommodated in the second accommodation unit 112 is supplied to the cathode chamber Sb of the electrolytic cell 11 via the third pipe portion L3.

The diaphragm 113 is a membrane disposed between the first accommodation unit 111 and the second accommodation unit 112, and causing at least one of ions and water (for example, both) to be movable between the first accommodation unit 111 and the second accommodation unit 112. The material of the diaphragm 113 is not particularly limited as long as the diaphragm 113 is a membrane which causes at least one (for example, both) of ions and water to be movable while preventing the mixing between oxygen contained in the first electrolyte and the hydrogen contained in the second electrolyte. For example, the diaphragm 113 is a porous membrane having liquid permeability, ion permeability, alkali resistance, and non-air permeability. For example, the diaphragm 113 is a diaphragm for alkaline water electrolysis. For example, a material of the diaphragm 113 includes a fluororesin impregnated with potassium titanate, polyantimony acid, polysulfone, hydrophilic polyphenylene sulfide, polyvinylidene fluoride, and polytetrafluoroethylene.

When the diaphragm 113 has ion permeability, ions move between the first electrolyte and the second electrolyte, and a difference in the hydrogen ion concentration (pH) between the first electrolyte and the second electrolyte is reduced (for example, homogenized). That is, the hydrogen ion concentration (pH) of the second electrolyte decreases, and the hydrogen ion concentration (pH) of the first electrolyte increases.

When the diaphragm 113 has liquid permeability, water moves between the first electrolyte and the second electrolyte, and a difference in the liquid amounts of the first electrolyte and the second electrolyte is reduced (for example, homogenized). That is, the liquid amount of the first electrolyte decreases, and the liquid amount of the second electrolyte increases.

According to this configuration, in addition to the action of the first embodiment, the following action is exhibited. That is, in one common tank 110, at least one of ions and water moves between the first electrolyte and the second electrolyte. Accordingly, at least one difference of the hydrogen ion concentration (pH) and the liquid amount between the first electrolyte and the second electrolyte is reduced. In this manner, the amount of the adjustment operation of the ion concentration adjustment unit 70 can be reduced. When the hydrogen ion concentrations (pH) of the first electrolyte and the second electrolyte are homogenized by providing the common tank 110, the ion concentration adjustment unit 70 may be omitted.

### (Third Embodiment)

Next, a third embodiment will be described. The third embodiment is different from the first embodiment in that a joining tank 121 is provided. Configurations other than those described below are the same as those in the first embodiment.

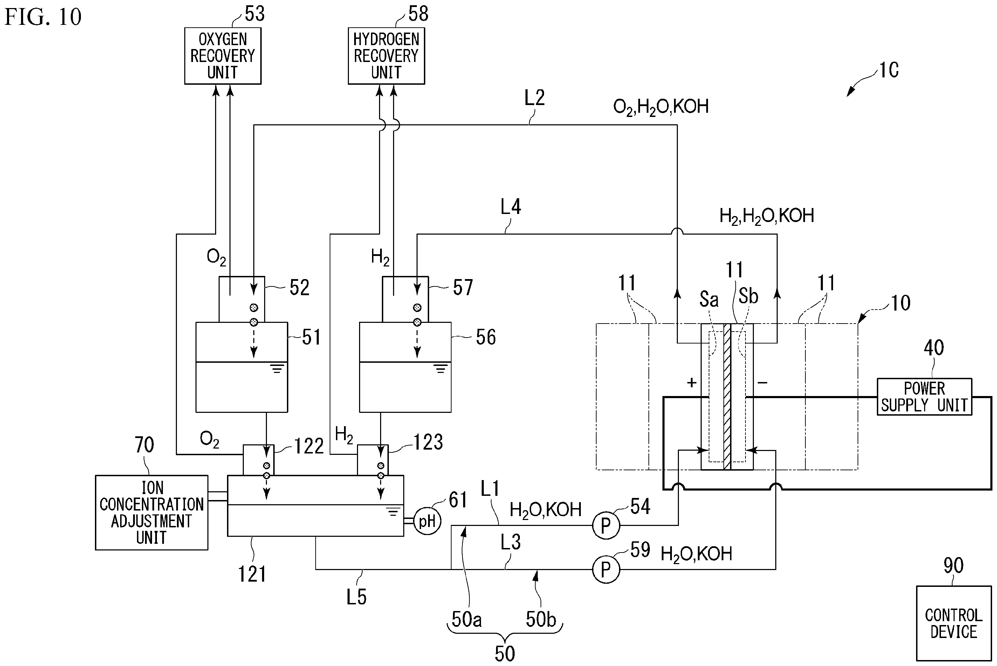

FIG. 10 is a diagram representing an electrolysis device 1C of the third embodiment. In the present embodiment, the electrolyte supply unit 50 includes the joining tank 121, an oxygen gas-liquid separation device 122, and a hydrogen gas-liquid separation device 123.

### (Joining Tank)

The joining tank 121 is a tank that joins and accommodates at least a portion of the first electrolyte and at least a portion of the second electrolyte. In the present embodiment, the joining tank 121 is disposed on the downstream side with respect to the first electrolyte tank 51 and the second electrolyte tank 56 in the flowing direction of the electrolyte. The first electrolyte accommodated in the first electrolyte tank 51, in which a large amount of oxygen is separated by the oxygen gas-liquid separation device 52, and the second electrolyte accommodated in the second electrolyte tank 56, in which a large amount of hydrogen is separated by the hydrogen gas-liquid separation device 57, flow into the joining tank 121. In the joining tank 121, there is no membrane or the like, and the first electrolyte and the second electrolyte are freely mixed. In this manner, the hydrogen ion concentrations (pH) of the first electrolyte and the second electrolyte are adjusted. In addition, the liquid amounts of the first electrolyte and the second electrolyte are adjusted.

In the present embodiment, all of the first electrolytes accommodated in the first electrolyte tank 51 and all of the second electrolytes accommodated in the second electrolyte tank 56 flow into the joining tank 121. Instead of this configuration, only a portion of the first electrolyte accommodated in the first electrolyte tank 51 and only a portion of the second electrolyte accommodated in the second electrolyte tank 56 may flow into the joining tank 121. That is, the electrolyte supply unit 50 may include a pipe portion configured to supply a portion of the first electrolyte accommodated in the first electrolyte tank 51 to the anode chamber Sa of the electrolytic cell 11 without passing through the joining tank 121. Similarly, the electrolyte supply unit 50 may include a pipe portion configured to supply a portion of the second electrolyte accommodated in the second electrolyte tank 56 to the cathode chamber Sb of the electrolytic cell 11 without passing through the joining tank 121.

A fifth pipe portion L5 is connected to a bottom portion of the joining tank 121. The fifth pipe portion L5 is intermediately branched, and the first pipe portion L1 and the third pipe portion L3 are connected. The electrolyte accommodated in the joining tank 121 is supplied to the electrolytic cell 11 through the fifth pipe portion L5, the first pipe portion L1, and the third pipe portion L3.

### (Oxygen Gas-Liquid Separation Device)

The oxygen gas-liquid separation device 122 is a gas-liquid separation unit provided between the first electrolyte tank 51 and the joining tank 121. The oxygen gas-liquid separation device 122 separates oxygen remaining in the first electrolyte. The separated oxygen is fed to the oxygen recovery unit 53. The oxygen gas-liquid separation device 122 is an example of a "first gas-liquid separation unit".

### (Hydrogen Gas-Liquid Separation Device)

The hydrogen gas-liquid separation device 123 is a gas-liquid separation unit provided between the second electrolyte tank 56 and the joining tank 121. The hydrogen gas-liquid separation device 123 separates the hydrogen remaining in the second electrolyte. The separated hydrogen is fed to the hydrogen recovery unit 58.

The hydrogen gas-liquid separation device 123 is an example of a "second gas-liquid separation unit".

### (Ion Concentration Sensor)

The ion concentration sensor 61 is provided in the joining tank 121. The ion concentration sensor 61 detects the ion concentration of the electrolyte after the first electrolyte and the second electrolyte are joined in the joining tank 121.

### (Ion Concentration Adjustment Unit)

The ion concentration adjustment unit 70 is provided in the joining tank 121. The ion concentration adjustment unit 70 supplies the adjustment solution to the joining tank 121. For example, the ion concentration adjustment unit 70 includes a first adjustment unit 70A and a second adjustment unit 70B, as in the first embodiment. In the present embodiment, when the detection result of the ion concentration sensor 61 is smaller than the threshold value Th11 (threshold value corresponding to the lower limit value of the allowable range of the hydrogen ion concentration (pH)), the first adjustment solution is supplied into the joining tank 121 by the first adjustment unit 70A. On the other hand, when the detection result of the ion concentration sensor 61 is equal to or greater than the threshold value Th12 (upper limit value of the allowable range of the hydrogen ion concentration (pH)), the second adjustment unit 70B supplies the second adjustment solution into the joining tank 121.

According to this configuration, in addition to the action of the first embodiment, the following action is exhibited. That is, the first electrolyte and the second electrolyte are joined in the joining tank 121. Accordingly, the hydrogen ion concentrations (pH) of the first electrolyte and the second electrolyte are homogenized. In addition, the liquid amounts of the first electrolyte and the second electrolyte are adjusted. In this manner, the amount of the adjustment operation of the ion concentration adjustment unit 70 can be reduced. When the hydrogen ion concentrations (pH) of the first electrolyte and the second electrolyte are homogenized by providing the joining tank 121, the ion concentration adjustment unit 70 may be omitted.

### (Fourth Embodiment)

Next, a fourth embodiment will be described. The fourth embodiment is different from the first embodiment in that a natural circulation type AEM water electrolysis device is configured. Configurations other than those described below are the same as those in the first embodiment.

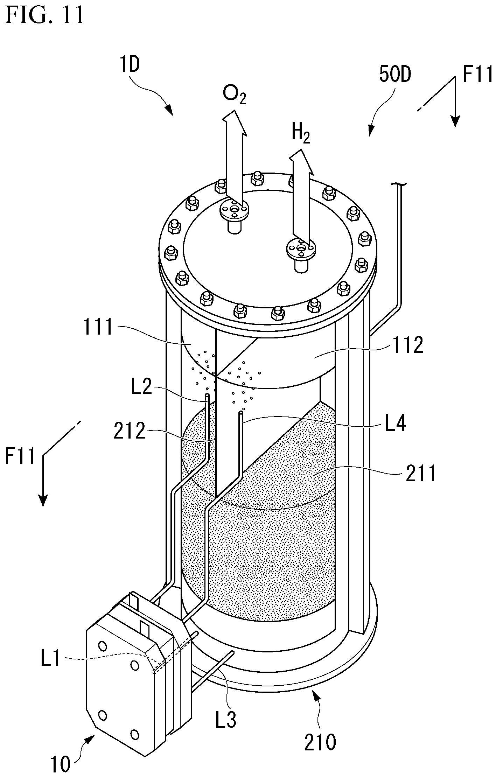

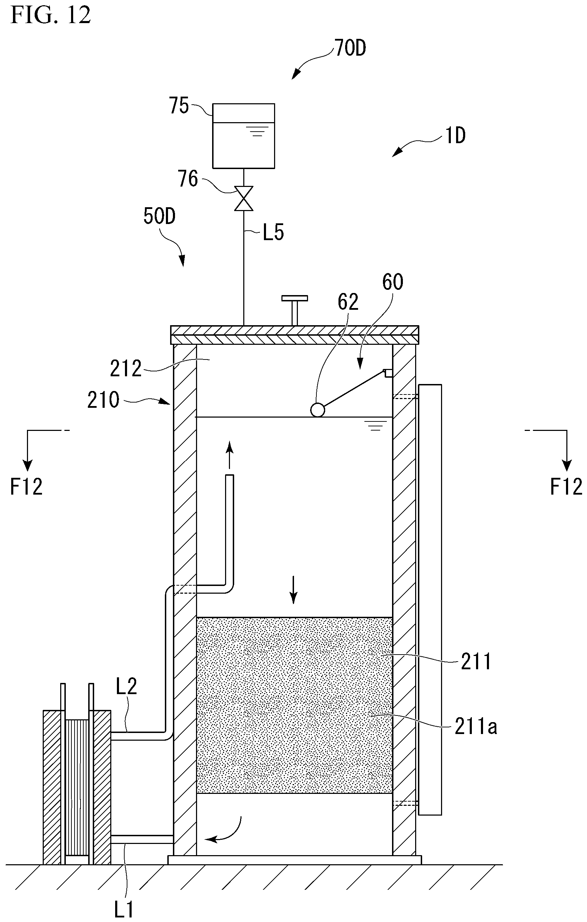

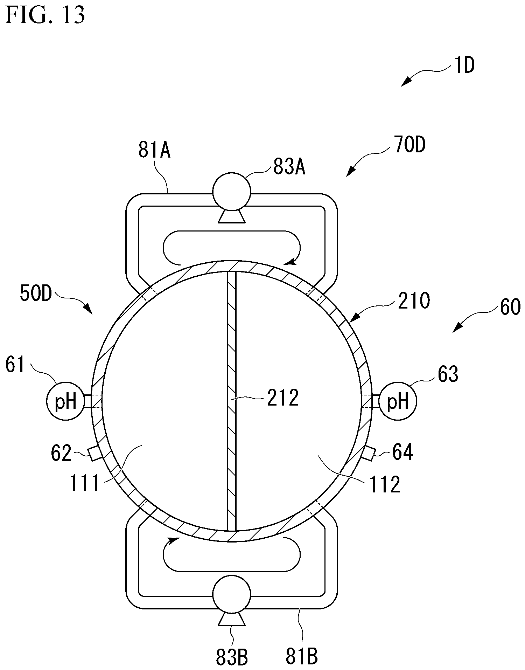

FIG. 11 is a diagram representing an electrolysis device 1D of the fourth embodiment. FIG. 12 is a cross-sectional view taken along line F11-F11 of the electrolysis device 1D represented in FIG. 11. FIG. 13 is a cross-sectional view taken along line F12-F12 of the electrolysis device 1D represented in FIG. 12.

As represented in FIG. 11, the electrolysis device 1D is the natural circulation type AEM water electrolysis device. For example, the electrolysis device 1D includes an electrolytic cell stack 10, a power supply unit 40 (refer to FIG. 1), an electrolyte supply unit 50D, a sensor unit 60, a concentration liquid amount adjustment unit 70D, and a control device 90 (refer to FIG. 1).

The electrolyte supply unit 50D includes a tank 210, a purification layer 211, a partition plate 212, and first to fourth pipe portions L1 to L4.

For example, the tank 210 is a vertical cylindrical container. For example, the tank 210 is a pressure-resistant container, and has pressure resistance of several tens of atmospheres to 800 atmospheres. In this case, for example, high-pressure oxygen and hydrogen can be obtained without using a compressor or the like. As a result, for example, high-pressure hydrogen can be supplied to a fuel tank of a hydrogen vehicle or the like as it is.

The purification layer 211 is provided at a predetermined interval from a lower end portion inside the tank 210, and has a configuration for purifying the circulating electrolyte. For example, the purification layer 211 is formed of a chelating ion exchange resin having a diameter of approximately several mm. In order to fill the tank 210 with the chelating ion exchange resin, a support member 211a having a net or pores is provided at a predetermined distance from the lower end portion of the tank 210, and the support member 211a is filled with the chelating ion exchange resin. Since the electrolyte passes through the purification layer 211, impurities in the electrolyte can be removed, and efficiency in the water electrolysis can be improved.

The partition plate 212 is suspended from an upper end portion of the tank 210, and extends in a vertical direction. For example, the partition plate 212 extends over an upper end portion and a lower end portion of the tank 210. The partition plate 212 separates the inside of the tank 210 into a first accommodation unit 111 having a semi-circular shape and a second accommodation unit 112 having a semi-circular shape. The first accommodation unit 111 is a space for accommodating the first electrolyte. The second accommodation unit 112 is a space for accommodating the second electrolyte.

In the present embodiment, the inside of the tank 210 is separated into the first accommodation unit 111 and the second accommodation unit 112 by the partition plate 212 that partitions the tank 210, but it is desirable that the partition plate 212 is in contact with at least the purification layer 211. The reason is that it is necessary to prevent the oxygen generated in the first accommodation unit 111 from coming into contact with the hydrogen generated in the second accommodation unit 112. Therefore, it is more desirable that the partition plate 212 is suspended to a lower portion of the purification layer 211.

The first pipe portion L1 connects the first accommodation unit 111 and the electrolytic cell stack 10, and guides the first electrolyte accommodated in the first accommodation unit 111 to the electrolytic cell 11 of the electrolytic cell stack 10. In the present embodiment, the first pipe portion L1 and the electrolytic cell stack 10 are disposed at positions lower than the liquid level height of the first electrolyte inside the first accommodation unit 111. In this manner, the first electrolyte accommodated in the first accommodation unit 111 is supplied to the electrolytic cell 11 of the electrolytic cell stack 10 through the first pipe portion L1 by the water head pressure of the first electrolyte.

The first electrolyte passing through the electrolytic cell stack 10 is returned to the first accommodation unit 111 through the second pipe portion L2. In the present embodiment, a downstream end (outlet end of the first electrolyte) of the second pipe portion L2 is located in the liquid of the first electrolyte in the first accommodation unit 111. In this manner, the second pipe portion L2 also has a function of the first gas-liquid separation device 52.

The third pipe portion L3 connects the second accommodation unit 112 and the electrolytic cell stack 10, and guides the second electrolyte accommodated in the second accommodation unit 112 to the electrolytic cell stack 10. In the present embodiment, the third pipe portion L3 and the electrolytic cell stack 10 are disposed at positions lower than the liquid level height of the second electrolyte in the second accommodation unit 112.

In this manner, the second electrolyte accommodated in the second accommodation unit 112 is supplied to the electrolytic cell stack 10 through the third pipe portion L3 by the water head pressure of the second electrolyte.

The second electrolyte passing through the electrolytic cell stack 10 is returned to the second accommodation unit 112 through the fourth pipe portion L4. In the present embodiment, the downstream end (outlet end of the second electrolyte) of the fourth pipe portion L4 is located in the liquid of the second electrolyte in the second accommodation unit 112. In this manner, the fourth pipe portion L4 also has a function of the second gas-liquid separation device 57.

The sensor unit 60 includes the first ion concentration sensor 61, the first liquid level sensor 62, the second ion concentration sensor 63, and the second liquid level sensor 64, as in the first embodiment.

### (Concentration Liquid Amount Adjustment Unit)

Next, the concentration liquid amount adjustment unit 70D will be described.

As represented in FIG. 13, for example, the concentration liquid amount adjustment unit 70D includes a first connection pipe 81A, a second connection pipe 81B, a first pump 83A, and a second pump 83B. The concentration liquid amount adjustment unit 70D is the "ion concentration adjustment unit", and is an example of a "liquid amount adjustment unit".

The first connection pipe 81A is a bypass pipe for moving a portion of the first electrolyte accommodated in the first accommodation unit 111 to the second accommodation unit 112. One end of the first connection pipe 81A is connected to the first accommodation unit 111 in the tank 210. The other end of the first connection pipe 81A is connected to the second accommodation unit 112 in the tank 210. The first connection pipe 81A is an example of a "first connection portion".

The first pump 83A is provided in an intermediate portion of the first connection pipe 81A. When the first pump 83A is driven, a portion of the first electrolyte accommodated in the first accommodation unit 111 moves to the second accommodation unit 112 through the first connection pipe 81A. A portion of the first electrolyte moving from the first accommodation unit 111 to the second accommodation unit 112 is an example of an "adjustment solution for adjusting the hydrogen ion concentration (pH)". The driving state of the first pump 83A is controlled, based on a control signal of the control device 90 (to be described later). In this manner, the ion concentrations can be homogenized by moving, a portion of the first electrolyte diluted as the electrolysis proceeds to the second accommodation unit 112.

When the liquid level height of the first electrolyte is higher than the liquid level height of the second electrolyte as the electrolysis proceeds, the first pump 83A may be omitted, and a portion of the first electrolyte accommodated in the first accommodation unit 111 may be moved to the second accommodation unit 112 through the first connection pipe 81A by a water head pressure corresponding to a difference between the liquid level height of the first electrolyte and the liquid level height of the second electrolyte.

The second connection pipe 81B is a bypass pipe for moving a portion of the second electrolyte accommodated in the second accommodation unit 112 to the first accommodation unit 111. One end of the second connection pipe 81B is connected to the second accommodation unit 112 in the tank 210. The other end of the second connection pipe 81B is connected to the first accommodation unit 111 in the tank 210. The second connection pipe 81B is an example of a "second connection portion".

The second pump 83B is provided in an intermediate portion of the second connection pipe 81B. Since the second pump 83B is driven, a portion of the second electrolyte accommodated in the second accommodation unit 112 moves to the first accommodation unit 111 through the second connection pipe 81B. A portion of the second electrolyte moving from the second accommodation unit 112 to the first accommodation unit 111 is an example of an "adjustment solution for adjusting the hydrogen ion concentration (pH)". A driving state of the second pump 83B is controlled, based on a control signal of the control device 90 (to be described later). In this manner, the ion concentrations can be homogenized by moving a portion of the second electrolyte concentrated as the electrolysis proceeds to the first accommodation unit 111.

As represented in FIG. 12, the concentration liquid amount adjustment unit 70D includes a tank 75 and a valve 76. The tank 75 accommodates the electrolyte (pure water or an alkaline aqueous solution) for replenishing the electrolyte consumed as the electrolysis proceeds. The electrolyte accommodated in the tank 75 is an example of an "adjustment solution for adjusting the hydrogen ion concentration (pH)". The valve 76 is provided in an intermediate portion of the pipe portion L5 that connects the tank 71 and the tank 210. The valve 76 can switch between an open state where flowing of the electrolyte accommodated in the tank 75 toward the tank 210 is allowed and a closed state where flowing of the electrolyte accommodated in the tank 75 toward the tank 210 is suppressed. The valve 76 switches between the open state and the closed state, based on a control signal of a control device 90 (to be described later).

### (Control Device)

Next, the control device 90 will be described.

For example, the control device 90 controls the concentration liquid amount adjustment unit 70D to perform the adjustment operation of the hydrogen ion concentration (pH), based on the detection results of the ion concentration sensors 61 and 63 or the liquid level sensors 62 and 64 (to be described later). For example, when the detection result of the first ion concentration sensor 61 is smaller than the threshold value Th11 (when diluted to be equal to or greater than a predetermined reference), the control device 90 drives the second pump 83B to move a portion of the second electrolyte accommodated in the second accommodation unit 112 to the first accommodation unit 111. In this manner, the hydrogen ion concentration (pH) of the first electrolyte is increased. In addition, instead of/in addition to the above-described configuration, when the detection result of the first liquid level sensor 62 is equal to or greater than the threshold value Th21 (when diluted to be equal to or greater than the predetermined reference), the control device 90 may drive the second pump 83B to move a portion of the second electrolyte accommodated in the second accommodation unit 112 to the first accommodation unit 111.

On the other hand, when the detection result of the second ion concentration sensor 63 is equal to or greater than the threshold value Th12 (when concentrated to be equal to or greater than the predetermined reference), the control device 90 drives the first pump 83A to move a portion of the first electrolyte accommodated in the first accommodation unit 111 to the second accommodation unit 112. In this manner, the hydrogen ion concentration (pH) of the second electrolyte is decreased. In instead of/in addition to the above-described configuration, when the detection result of the second liquid level sensor 64 is smaller than the threshold value Th22, the control device 90 may drive the first pump 83A to move a portion of the first electrolyte accommodated in the first accommodation unit 111 to the second accommodation unit 112.

In addition, the control device 90 may perform the following control instead of/in addition to the above-described control example. That is, when a difference between the detection result of the first ion concentration sensor 61 and the detection result of the second ion concentration sensor 63 exceeds a threshold value, the control device 90 may drive the first pump 83A and the second pump 83B to move a portion of the first electrolyte accommodated in the first accommodation unit 111 to the second accommodation unit 112, and to move a portion of the second electrolyte accommodated in the second accommodation unit 112 to the first accommodation unit 111.

In addition, when a consumption amount of the electrolyte exceeds a preset threshold value, based on the detection result of the first liquid level sensor 82 or the second liquid level sensor 84, the control device 90 controls the valve 76 to be in the open state. In this manner, the electrolyte accommodated in the tank 75 is allowed to flow toward the tank 210. In this manner, the consumed electrolyte is replenished.

### (Modification Example of Fourth Embodiment)

Next, a modification example of the fourth embodiment will be described.

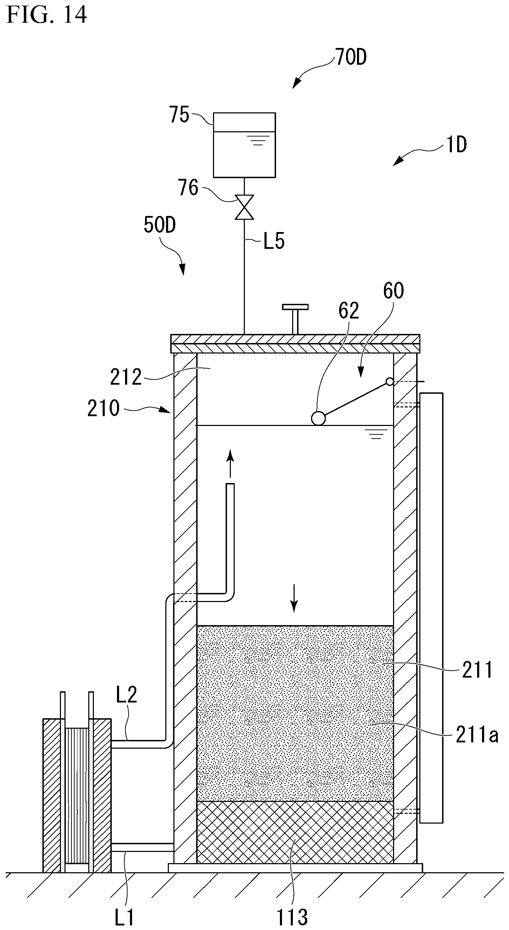

FIG. 14 is a cross-sectional view representing an electrolysis device 1D of the modification example of the fourth embodiment. In the present modification example, the partition plate 212 is partially or entirely formed of the diaphragm 113. For example, the diaphragm 113 is provided in a lower portion of the partition plate 212.

The diaphragm 113 is a membrane disposed between the first accommodation unit 111 and the second accommodation unit 112, and causing at least one of ions and water (for example, both) to be movable between the first accommodation unit 111 and the second accommodation unit 112. A material of the diaphragm 113 is not particularly limited as long as the diaphragm 113 is a membrane which causes at least one (for example, both) of ions and water to be movable while preventing the mixing between oxygen contained in the first electrolyte and the hydrogen contained in the second electrolyte. For example, the diaphragm 113 is a diaphragm for alkaline water electrolysis. Specific examples of the diaphragm 113 are as described above in the second embodiment.

When the diaphragm 113 has ion permeability, ions move between the first electrolyte and the second electrolyte, and a difference in the hydrogen ion concentration (pH) between the first electrolyte and the second electrolyte is reduced (for example, homogenized). That is, the hydrogen ion concentration (pH) of the second electrolyte decreases, and the hydrogen ion concentration (pH) of the first electrolyte increases.

When the diaphragm 113 has liquid permeability, water moves between the first electrolyte and the second electrolyte, and a difference in the liquid amounts of the first electrolyte and the second electrolyte is reduced (for example, homogenized). That is, the liquid amount of the first electrolyte decreases, and the liquid amount of the second electrolyte increases. In the present modification example, the first connection pipe 81A, the second connection pipe 81B, the first pump 83A, the second pump 83B, and the like may be omitted.

### (Other Embodiments)

Hitherto, some embodiments and modification examples have been described. However, the embodiments and the modification examples are not limited to the above-described examples. For example, the hydrogen ion concentration (pH) may be adjusted by the first adjustment unit 70A and the second adjustment unit 70B at a predetermined cycle instead of being adjusted when the detection result of the sensor satisfies the predetermined condition. In this case, the amount of the hydrogen ion concentration (pH) adjusted by the first adjustment unit 70A and the second adjustment unit 70B may be settled, based on the detection results of one or more sensors included in the sensor unit 60.

### <Appendix>

The electrolysis device according to each of the embodiments is understood as follows, for example.
(1) The electrolysis devices 1, 1A, 1B, 1C, and 1D according to a first aspect include the electrolytic cell 11, the electrolyte supply unit 50, and the ion concentration adjustment unit 70. The electrolytic cell 11 includes the anode chamber Sa, the cathode chamber Sb, and the ion exchange membrane 31 disposed between the anode chamber Sa and the cathode chamber Sb. The electrolyte supply unit 50 includes at least one tank (for example, the electrolyte tanks 51 and 56, the common tank 110, or the joining tank 121) accommodating the electrolyte, and circulates a portion of the electrolyte as the first electrolyte between the at least one tank and the anode chamber Sa, and circulates another portion of the electrolyte as the second electrolyte between the at least one tank and the cathode chamber Sb. The ion concentration adjustment unit 70 supplies the adjustment solution for adjusting the hydrogen ion concentration (pH) to the electrolyte supply unit 50. According to this configuration, when the hydrogen ion concentration (pH) of the electrolyte is changed by passing through the electrolytic cell 11, the hydrogen ion concentration (pH) of the electrolyte can be maintained within a constant range by adding the adjustment solution to the electrolyte. In this manner, a change in the electrical conductivity of the electrolyte can be suppressed, and the deterioration in the performance of the electrolysis device can be suppressed.
(2) As the electrolysis devices 1, 1A, 1B, 1C, and 1D according to a second aspect, the electrolysis device according to (1) further includes the sensor (for example, the first ion concentration sensor 61, the first liquid level sensor 62, the second ion concentration sensor 63, or the second liquid level sensor 64) configured to detect a value related to the hydrogen ion concentration (pH) or the liquid amount of the electrolyte. The ion concentration adjustment unit 70 supplies the adjustment solution to the electrolyte supply unit 50, when the detection result of the sensor satisfies a predetermined condition. According to this configuration, the hydrogen ion concentration (pH) of the electrolyte can be adjusted at a timing suitable for a change in the hydrogen ion concentration (pH) or by the adjustment amount suitable for a change in the hydrogen ion concentration (pH), based on the detection result of the sensor configured to detect the value related to the hydrogen ion concentration (pH) or the liquid amount of the electrolyte. In this manner, the hydrogen ion concentration (pH) of the electrolyte can be more accurately maintained within a constant range.
(3) As the electrolysis devices 1, 1A, 1B, and 1C according to a third aspect, in the electrolysis device according to (1) or (2), the adjustment solution includes the first adjustment solution for increasing the hydrogen ion concentration (pH) and the second adjustment solution for decreasing the hydrogen ion concentration (pH). The ion concentration adjustment unit 70 includes the first adjustment unit 70A configured to supply the first adjustment solution to the electrolyte supply unit 50 and the second adjustment unit 70B configured to supply the second adjustment solution to the electrolyte supply unit 50. According to this configuration, the hydrogen ion concentration (pH) can be adjusted in a direction of suppressing a change, in any case of a change in the electrolyte in a direction in which the hydrogen ion concentration (pH) increases or a change in the electrolyte in a direction in which the hydrogen ion concentration (pH) decreases. In this manner, the hydrogen ion concentration (pH) of the electrolyte can be more accurately maintained within a constant range.
(4) As the electrolysis devices 1, 1A, 1B, and 1C according to a fourth aspect, in the electrolysis device according to (3), the first adjustment unit 70A supplies the first adjustment solution to the first portion (for example, the first electrolyte tank 51, the first pipe portion L1, or the second pipe portion L2) in which the first electrolyte is accommodated or flows in the electrolyte supply unit 50, and the second adjustment unit 70B supplies the second adjustment solution to the second portion (for example, the second electrolyte tank 56, the third pipe portion L3, or the fourth pipe portion L4) in which the second electrolyte is accommodated or flows in the electrolyte supply unit 50. According to this configuration, the first adjustment solution can be used to adjust the first electrolyte having the low hydrogen ion concentration (pH), and the second adjustment solution can be used to adjust the second electrolyte having the high hydrogen ion concentration (pH). In this manner, the hydrogen ion concentration (pH) of the electrolyte can be more accurately maintained within a constant range.
(5) As the electrolysis devices 1 and 1A according to a fifth aspect, in the electrolysis device (4), the sensor includes the first sensor (for example, the first ion concentration sensor 61 or the first liquid level sensor 62) configured to detect the value related to the hydrogen ion concentration (pH) or the liquid amount of the first electrolyte, and the second sensor (for example, the second ion concentration sensor 63 or the second liquid level sensor 64) configured to detect the value related to the hydrogen ion concentration (pH) or the liquid amount of the second electrolyte. The first adjustment unit 70A supplies the first adjustment solution to the first portion of the electrolyte supply unit 50, when the detection result of the first sensor satisfies the first predetermined condition, and the second adjustment unit 70B supplies the second adjustment solution to the second portion of the electrolyte supply unit 50, when the detection result of the second sensor satisfies the second predetermined condition. According to this configuration, the first electrolyte can be adjusted, based on the detection result of the sensor related to the first electrolyte, and the second electrolyte can be adjusted, based on the detection result of the sensor related to the second electrolyte. In this manner, the hydrogen ion concentration (pH) of the electrolyte can be more accurately maintained within a constant range.
(6) As electrolysis device 1 or 1A according to a sixth aspect, in any one of electrolysis devices according to (3) to (5), the at least one tank includes the first tank (for example, the first electrolyte tank 51) accommodating the first electrolyte and the second tank (for example, the second electrolyte tank 56) accommodating the second electrolyte. The electrolyte supply unit 50 includes the first flow path portion (for example, the second pipe portion L2) that guides the first electrolyte passing through the anode chamber Sa to the first tank, and the second flow path portion (for example, the fourth pipe portion L4) that guides the second electrolyte passing through the cathode chamber Sb to the second tank. The first adjustment unit 70A supplies the first adjustment solution to the first flow path portion, and the second adjustment unit 70B supplies the second adjustment solution to the second flow path portion. According to this configuration, the first adjustment solution is added to the first electrolyte at a position on the upstream side with respect to the first tank and the second tank, and the second adjustment solution is added to the second electrolyte. Therefore, the first electrolyte and the first adjustment solution flow into the first tank, and are mixed well inside the first tank. Thereafter, both are supplied to the anode chamber Sa of the electrolytic cell 11. Similarly, the second electrolyte and the second adjustment solution flow into the second tank, and are mixed well inside the second tank. Thereafter, both are supplied to the cathode chamber Sb of the electrolytic cell 11. Therefore, for example, the hydrogen ion concentration (pH) of the electrolyte can be more accurately maintained within a constant range, compared to when the adjustment solution is added to the electrolyte in the first pipe portion L1 or the third pipe portion L3.
(7) As electrolysis device 1 or 1A according to a seventh aspect, the electrolysis device according to any one of (1) to (6) further includes the liquid amount adjustment unit 80 that performs adjustment related to the liquid amount of the electrolyte. The at least one tank includes the first tank (for example, the first electrolyte tank 51) accommodating the first electrolyte and the second tank (for example, the second electrolyte tank 56) accommodating the second electrolyte. The liquid amount adjustment unit 80 includes the connection portion (for example, the connection pipe 81) that moves a portion of the first electrolyte accommodated in the first tank to the second tank, or the discharge portion (for example, the discharge pipe 85) that discharges a portion of the second electrolyte accommodated in the first tank to the outside. According to this configuration, the liquid amount of the first electrolyte increasing as the electrolysis proceeds can be properly reduced.
(8) As the electrolysis device 1B according to an eighth aspect, in the electrolysis device according to any one of (1) to (5), the at least one tank includes the common tank 110. The common tank 110 includes the first accommodation unit 111 accommodating the first electrolyte, the second accommodation unit 112 accommodating the second electrolyte, and the membrane disposed between the first accommodation unit 111 and the second accommodation unit 112. The membrane causes at least one of ions and water to be movable between the first accommodation unit 111 and the second accommodation unit 112. According to this configuration, at least one of the hydrogen ion concentration (pH) and the liquid amount of the electrolyte can be adjusted inside the common tank 110. In this manner, the hydrogen ion concentration (pH) and/or the liquid amount of the electrolyte can be more efficiently adjusted, compared to when the first electrolyte tank 51 and the second electrolyte tank 56 are separated.
(9) As the electrolysis device 1B according to a ninth aspect, in the electrolysis device according to (8), the adjustment solution includes the first adjustment solution for increasing the hydrogen ion concentration (pH) and the second adjustment solution for decreasing the hydrogen ion concentration (pH). The electrolyte supply unit 50 includes the first flow path portion (for example, the second pipe portion L2) that guides the first electrolyte passing through the anode chamber Sa to the first accommodation unit 111, and the second flow path portion (for example, the fourth pipe portion L4) that guides the second electrolyte passing through the cathode chamber Sb to the second accommodation unit 112. The ion concentration adjustment unit 70 includes the first adjustment unit 70A configured to supply the first adjustment solution to the first flow path portion, and the second adjustment unit 70B configured to supply the second adjustment solution to the second flow path portion. According to this configuration, the first adjustment solution is added to the first electrolyte at the position on the upstream side with respect to the common tank 110, and the second adjustment solution is added to the second electrolyte. Therefore, the first electrolyte and the first adjustment solution flow into the common tank 110, and are mixed well inside the common tank 110. Thereafter, both are supplied to the anode chamber Sa of the electrolytic cell 11. Similarly, the second electrolyte and the second adjustment solution flow into the common tank 110, and are mixed well inside the common tank 110. Thereafter, both are supplied to the cathode chamber Sb of the electrolytic cell 11. Therefore, for example, the hydrogen ion concentration (pH) of the electrolyte can be more accurately maintained within a constant range, compared to when the adjustment solution is added to the electrolyte in the first pipe portion L1 or the third pipe portion L3.
(10) As the electrolysis device 1C according to a tenth aspect, in the electrolysis device 1C of any one of (1) to (5), the at least one tank includes the joining tank 121 that joins and accommodates at least a portion of the first electrolyte and at least a portion of the second electrolyte. The ion concentration adjustment unit 70 supplies the adjustment solution to the joining tank 121. According to this configuration, the hydrogen ion concentration (pH) and the liquid amount of the electrolyte are adjusted inside the joining tank 121. In this manner, the hydrogen ion concentration (pH) and the liquid amount of the electrolyte can be more efficiently adjusted, compared to when the joining tank 121 is not provided.
(11) As the electrolysis device 1C according to an eleventh aspect, in the electrolysis device 1C according to (10), the at least one tank further includes the first tank (for example, the first electrolyte tank 51) disposed on the upstream side with respect to the joining tank 121 in the flowing direction of the liquid and accommodating the first electrolyte, and the second tank (for example, the second electrolyte tank 56) disposed on the upstream side with respect to the joining tank 121 in the flowing direction of the electrolyte and accommodating the second electrolyte. The first electrolyte flows into the joining tank 121 from the first tank, and the second electrolyte flows into the joining tank 121 from the second tank. The electrolyte supply unit 50 further includes the first gas-liquid separation unit (for example, the oxygen gas-liquid separation device 122) disposed between the first tank and the joining tank 121, and the second gas-liquid separation unit (for example, the hydrogen gas-liquid separation device 123) disposed between the second tank and the joining tank 121. According to this configuration, it is possible to more reliably suppress the mixing between the oxygen contained in the first electrolyte and the oxygen contained in the second electrolyte inside the joining tank 121.
(12) As the electrolysis device 1D according to a twelfth aspect, in the electrolysis device 1D according to (1) or (2), the at least one tank includes a tank 210. The electrolyte supply unit 50D includes the partition portion (for example, the partition plate 212) that partitions the inside of the tank 210 into the first accommodation unit 111 accommodating the first electrolyte and the second accommodation unit 112 accommodating the second electrolyte, and the first connection portion (for example, the first connection pipe 81A) connected to the tank 210 and guiding a portion of the first electrolyte accommodated in the first accommodation unit 111 to the second accommodation unit 112, as the adjustment solution. According to this configuration, the concentration of the concentrated second electrolyte can be decreased by using a portion of the diluted first electrolyte.
(13) As the electrolysis device 1D according to a thirteenth aspect, the electrolysis device 1D according to (12), the electrolysis devicel 1D includes the purification layer 211 disposed inside the tank 210 and is the natural circulation type device that naturally circulates the electrolyte between the electrolytic cell 11 and the tank 210 while purifying the electrolyte to be supplied to the electrolytic cell 11. According to this configuration, the electrolyte purified by the purification layer 211 can be supplied to the electrolytic cell 11, and power required for circulating the electrolyte can be suppressed.
(14) As the electrolysis device 1D according to a fourteenth aspect, in the electrolysis device 1D according to (12), the electrolyte supply unit 50D includes the second connection portion (for example, the second connection pipe 81B) connected to the tank 210 and guiding a portion of the second electrolyte accommodated in the second accommodation unit 112 to the first accommodation unit 111, as the adjustment solution. According to this configuration, the concentration of the diluted first electrolyte can be increased by using a portion of the concentrated second electrolyte.
(15) The electrolysis device 1B according to a fifteenth aspect includes the electrolytic cell 11 and the electrolyte supply unit 50. The electrolytic cell 11 includes the anode chamber Sa, the cathode chamber Sb, and the ion exchange membrane 31 disposed between the anode chamber Sa and the cathode chamber Sb. The electrolyte supply unit 50 includes the common tank 110 accommodating the electrolyte, configured to circulate a portion of the electrolyte as the first electrolyte between the common tank 110 and the anode chamber Sa, and configured to circulate another portion of the electrolyte as the second electrolyte between the common tank 110 and the cathode chamber Sb. The common tank 110 includes the first accommodation unit 111 accommodating the first electrolyte, the second accommodation unit 112 accommodating the second electrolyte, and the membrane (for example, the diaphragm 113) disposed between the first accommodation unit 111 and the second accommodation unit 112. The membrane causes at least one of ions and water to be movable between the first accommodation unit 111 and the second accommodation unit 112. According to this configuration, at least one of the hydrogen ion concentration (pH) and the liquid amount of the electrolyte can be adjusted inside the common tank 110. In this manner, the hydrogen ion concentration (pH) and/or the liquid amount of the electrolyte can be more efficiently adjusted, compared to when the first electrolyte tank 51 and the second electrolyte tank 56 are separated.
(16) The electrolysis device 1C according to a sixteenth aspect includes the electrolytic cell 11 and the electrolyte supply unit 50. The electrolytic cell 11 includes the anode chamber Sa, the cathode chamber Sb, and the ion exchange membrane 31 disposed between the anode chamber Sa and the cathode chamber Sb. The electrolyte supply unit 50 includes at least one tank accommodating the electrolyte, and circulates a portion of the electrolyte as the first electrolyte between the at least one tank and the anode chamber Sa, and circulates another portion of the electrolyte as the second electrolyte between the at least one tank and the cathode chamber Sb. The at least one tank includes the joining tank 121 that joins and accommodates the first electrolyte and the second electrolyte. The electrolyte supply unit 50 supplies a portion of the electrolyte accommodated in the joining tank 121 to the anode chamber Sa as the first electrolyte, and supplies another portion of the electrolyte accommodated in the joining tank 121 to the cathode chamber Sb as the second electrolyte. According to this configuration, the hydrogen ion concentration (pH) and the liquid amount of the electrolyte are adjusted inside the joining tank 121. In this manner, the hydrogen ion concentration (pH) and the liquid amount of the electrolyte can be more efficiently adjusted, compared to when the joining tank 121 is not provided.

### INDUSTRIAL APPLICABILITY

For example, the present disclosure relates to an electrolysis device that generates hydrogen by electrolyzing water or an alkaline aqueous solution contained in an electrolyte. According to the present disclosure, a deterioration in performance of the electrolysis device can be suppressed.

### REFERENCE SIGNS LIST

1, 1A, 1B, 1C, 1D Electrolysis device
11 Electrolytic cell
Sa Anode chamber
Sb Cathode chamber
31 Ion exchange membrane
50 Electrolyte supply unit
51 First electrolyte tank
L1 First pipe portion
L2 Second pipe portion (first flow path portion)
56 Second electrolyte tank
L3 Third pipe portion
L4 Fourth pipe portion (second flow path portion)
60 Sensor unit
61 First ion concentration sensor
62 First liquid level sensor
63 Second ion concentration sensor
64 Second liquid level sensor
70 Ion concentration adjustment unit
70A First adjustment unit
70B Second adjustment unit
80 Liquid amount adjustment unit
81, 81A, 81B Connection pipe (connection portion)
85 Discharge pipe (discharge portion)
110 Common tank
111 First accommodation unit
112 Second accommodation unit
113 Diaphragm (membrane)
121 Joining tank
122 Oxygen gas-liquid separation device (first gas-liquid separation unit)
123 Hydrogen gas-liquid separation device (second gas-liquid separation unit)
210 Tank
212 Partition

## Claims

1. An electrolysis device comprising:
an electrolytic cell including an anode chamber, a cathode chamber, and an ion exchange membrane disposed between the anode chamber and the cathode chamber;
an electrolyte supply unit including at least one tank accommodating an electrolyte, configured to circulate a portion of the electrolyte as a first electrolyte between the at least one tank and the anode chamber, and configured to circulate another portion of the electrolyte as a second electrolyte between the at least one tank and the cathode chamber; and
an ion concentration adjustment unit configured to supply an adjustment solution for adjusting a hydrogen ion concentration (pH) to the electrolyte supply unit.

2. The electrolysis device according to Claim 1, further comprising:
a sensor configured to detect a value related to the hydrogen ion concentration (pH) or a liquid amount of the electrolyte,
wherein the ion concentration adjustment unit supplies the adjustment solution to the electrolyte supply unit, when a detection result of the sensor satisfies a predetermined condition.

3. The electrolysis device according to Claim 1,
wherein the adjustment solution includes a first adjustment solution for increasing the hydrogen ion concentration (pH) and a second adjustment solution for decreasing the hydrogen ion concentration (pH), and
the ion concentration adjustment unit includes a first adjustment unit configured to supply the first adjustment solution to the electrolyte supply unit and a second adjustment unit configured to supply the second adjustment solution to the electrolyte supply unit.

4. The electrolysis device according to Claim 3,
wherein the first adjustment unit supplies the first adjustment solution to a first portion in which the first electrolyte is accommodated or the first electrolyte flows in the electrolyte supply unit, and
the second adjustment unit supplies the second adjustment solution to a second portion in which the second electrolyte is accommodated or the second electrolyte flows in the electrolyte supply unit.

5. The electrolysis device according to Claim 4, further comprising:
a first sensor configured to detect a value related to the hydrogen ion concentration (pH) or a liquid amount of the first electrolyte; and
a second sensor configured to detect a value related to the hydrogen ion concentration (pH) or a liquid amount of the second electrolyte,
wherein the first adjustment unit supplies the first adjustment solution to the first portion of the electrolyte supply unit, when a detection result of the first sensor satisfies a first predetermined condition, and
the second adjustment unit supplies the second adjustment solution to the second portion of the electrolyte supply unit, when a detection result of the second sensor satisfies a second predetermined condition.

6. The electrolysis device according to Claim 3,
wherein the at least one tank includes a first tank accommodating the first electrolyte and a second tank accommodating the second electrolyte,
the electrolyte supply unit includes a first flow path portion that guides the first electrolyte passing through the anode chamber to the first tank and a second flow path portion that guides the second electrolyte passing through the cathode chamber to the second tank,
the first adjustment unit supplies the first adjustment solution to the first flow path portion, and
the second adjustment unit supplies the second adjustment solution to the second flow path portion.

7. The electrolysis device according to Claim 1, further comprising:
a liquid amount adjustment unit that performs adjustment related to a liquid amount of the electrolyte,
wherein the at least one tank includes a first tank accommodating the first electrolyte and a second tank accommodating the second electrolyte, and
the liquid amount adjustment unit includes a connection portion that moves a portion of the first electrolyte accommodated in the first tank to the second tank or a discharge portion that discharges the portion of the first electrolyte accommodated in the first tank to an outside.

8. The electrolysis device according to Claim 1,
wherein the at least one tank includes a common tank, and
the common tank includes a first accommodation unit accommodating the first electrolyte, a second accommodation unit accommodating the second electrolyte, and a membrane disposed between the first accommodation unit and the second accommodation unit, and
the membrane causes at least one of ions and water to be movable between the first accommodation unit and the second accommodation unit.

9. The electrolysis device according to Claim 8,
wherein the adjustment solution includes a first adjustment solution for increasing the hydrogen ion concentration (pH) and a second adjustment solution for decreasing the hydrogen ion concentration (pH),
the electrolyte supply unit includes a first flow path portion that guides the first electrolyte passing through the anode chamber to the first accommodation unit and a second flow path portion that guides the second electrolyte passing through the cathode chamber to the second accommodation unit, and
the ion concentration adjustment unit includes a first adjustment unit configured to supply the first adjustment solution to the first flow path portion and a second adjustment unit configured to supply the second adjustment solution to the second flow path portion.

10. The electrolysis device according to Claim 1,
wherein the at least one tank includes a joining tank that joins and accommodates at least a portion of the first electrolyte and at least a portion of the second electrolyte, and
the ion concentration adjustment unit supplies the adjustment solution to the joining tank.

11. The electrolysis device according to Claim 10,
wherein the at least one tank further includes a first tank disposed on an upstream side with respect to the joining tank in a flowing direction of the electrolyte and accommodating the first electrolyte, and a second tank disposed on the upstream side with respect to the joining tank in the flowing direction of the electrolyte and accommodating the second electrolyte,
the first electrolyte flows into the joining tank from the first tank, and the second electrolyte flows into the joining tank from the second tank, and
the electrolyte supply unit further includes a first gas-liquid separation unit disposed between the first tank and the joining tank, and a second gas-liquid separation unit disposed between the second tank and the joining tank.

12. The electrolysis device according to Claim 1,
wherein the at least one tank includes a tank, and
the electrolyte supply unit includes a partition portion that partitions an inside of the tank into a first accommodation unit accommodating the first electrolyte and a second accommodation unit accommodating the second electrolyte, and a first connection portion connected to the tank and guiding a portion of the first electrolyte accommodated in the first accommodation unit as the adjustment solution to the second accommodation unit.

13. The electrolysis device according to Claim 12,
wherein the electrolysis device includes a purification layer disposed inside the tank and is a natural circulation type device that naturally circulates the electrolyte between the electrolytic cell and the tank while purifying the electrolyte to be supplied to the electrolytic cell.

14. The electrolysis device according to Claim 12,
wherein the electrolyte supply unit includes a second connection portion connected to the tank and guiding a portion of the second electrolyte accommodated in the second accommodation unit as the adjustment solution to the first accommodation unit.

15. An electrolysis device comprising:
an electrolytic cell including an anode chamber, a cathode chamber, and an ion exchange membrane disposed between the anode chamber and the cathode chamber; and
an electrolyte supply unit including a common tank accommodating an electrolyte, configured to circulate a portion of the electrolyte as a first electrolyte between the common tank and the anode chamber, and configured to circulate another portion of the electrolyte as a second electrolyte between the common tank and the cathode chamber,
wherein the common tank includes a first accommodation unit accommodating the first electrolyte, a second accommodation unit accommodating the second electrolyte, and a membrane disposed between the first accommodation unit and the second accommodation unit, and
the membrane causes at least one of ions and water to be movable between the first accommodation unit and the second accommodation unit.

16. An electrolysis device comprising:
an electrolytic cell including an anode chamber, a cathode chamber, and an ion exchange membrane disposed between the anode chamber and the cathode chamber; and
an electrolyte supply unit including at least one tank accommodating an electrolyte, configured to circulate a portion of the electrolyte as a first electrolyte between the at least one tank and the anode chamber, and configured to circulate another portion of the electrolyte as a second electrolyte between the at least one tank and the cathode chamber,
wherein the at least one tank includes a joining tank that joins and accommodates at least a portion of the first electrolyte and at least a portion of the second electrolyte, and
the electrolyte supply unit supplies a portion of the electrolyte accommodated in the joining tank as the first electrolyte to the anode chamber, and supplies another portion of the electrolyte accommodated in the joining tank as the second electrolyte to the cathode chamber.
